(19) 

**Europäisches Patentamt**
**European Patent Office**
**Office européen des brevets**

(11) **EP 4 716 121 A1**

(12) **EUROPEAN PATENT APPLICATION**
published in accordance with Art. 153(4) EPC

(43) Date of publication:
**25.03.2026 Bulletin 2026/13**

(21) Application number: **23936932.5**

(22) Date of filing: **15.05.2023**

(51) International Patent Classification (IPC):
**H04L 1/00** (2006.01)  **H04B 7/0413** (2017.01)
**H04W 24/10** (2009.01)

(52) Cooperative Patent Classification (CPC):
**H04B 7/0413; H04L 1/00; H04W 24/10**

(86) International application number:
**PCT/CN2023/094270**

(87) International publication number:
**WO 2024/234245 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **ZHU, Jing**
  **Beijing 100022 (CN)**
• **ZHANG, Lei**
  **Beijing 100022 (CN)**
• **LU, Yiwen**
  **Beijing 100022 (CN)**

(74) Representative: **Haseltine Lake Kempner LLP**
**Cheapside House**
**138 Cheapside**
**London EC2V 6BJ (GB)**

(54) **CHANNEL STATE INFORMATION MAPPING METHOD AND APPARATUS**

(57) Embodiments of the present disclosure provide a method and an apparatus for mapping channel state information, the method including: a terminal equipment receives a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$; the terminal equipment receives indication information, the indication information being used to trigger (indicate/activate) N sub-configurations in the P sub-configurations, $1 \leq N \leq P$; and the terminal equipment determines a CSI report at least according to a CSI field mapping order, wherein the CSI report includes at least one piece of CSI corresponding to the N sub-configurations.

201 a terminal equipment receives a CSI reporting configuration, the CSI reporting configuration being related to K pieces of CSI, the CSI reporting configuration comprising P sub-configurations, one of the P sub-configurations corresponding to at least one piece of CSI

202 the terminal equipment receives indication information, the indication information being used to trigger/indicate/activate N sub-configurations in the P sub-configurations

203 the terminal equipment determines a CSI report at least according to a CSI field mapping order, wherein the CSI report comprises at least one piece of CSI corresponding to the N sub-configurations

**FIG. 2**

**Description**

TECHNICAL FIELD

Embodiments of the present disclosure relate to the technical field of communication.

BACKGROUND

As an important constituent part of global new-type infrastructure construction, fifth-generation (5G) communication networks have achieved rapid development worldwide in recent years. With the construction of 5G, Active Antenna Unit (AAU) is commercially used on a large scale. Compared with Remote Radio Unit (RRU) mainly used in 3G and 4G, power consumption of the AAU is relatively large. Therefore, energy consumption of a 5G device will also increase in multiples.

5G defines three service types, i.e., Enhanced Mobile Broadband (eMBB), massive Machine Type of Communication (mMTC) and Ultra Reliable Low Latency Communication (URLLC), resulting in a continuous increase in the number of 5G small packet sudden services, with base stations working non-stop for 24 hours. Average daily energy consumption of a 5G site will also be more than twice that of a 4G site.

In addition, 3GPP introduces key technologies such as Massive MIMO and a larger radio frequency bandwidth in the 5G era. 5G supports higher data rates and greater data traffic, requiring more transmission bandwidths. Deployment of a high-frequency band will also be a main frequency band for future expansion of 5G. However, high-frequency band transmission characteristics limit a coverage range of a site, thus making deployment of 5G sites denser. Moreover, energy consumption brought about by the increase in sites will impose a huge operational cost pressure on operators.

Network scale is getting larger and larger, and the energy consumption of operators is continuously increasing. By taking the data released by the Ministry of Industry and Information Technology of China as an example, the energy consumption in 2022 will increase by about 80% compared with that in 2015. Thus, network energy saving has important significance for saving operating costs, 5G network energy saving is an urgent problem to be solved.

To achieve energy saving, a network device may carry out energy-saving processing respectively in the aspects of time domain, frequency domain, spatial domain and/or energy domain, according to a network load situation. For example, in the aspects of spatial and energy domains, the network device may turn off some antennas when a load is lower, so as to achieve the purpose of energy saving. In the aspect of time domain, the network device may introduce a cell-level discontinuous transmission/reception technology, enabling the network device not to transmit and/or receive signals during certain dormant periods, so as to achieve the purpose of energy saving.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

SUMMARY

However, the inventor finds that some scenarios of wireless communication applications (such as an energy-saving mode) might have negative impacts. For example, when a network device dynamically adjusts the number of antennas or transmission power, it may cause a change in a corresponding channel, resulting in inaccurate or untimely reporting of Channel State Information (CSI) from a terminal equipment, ultimately affecting transmission performance. How to perform CSI mapping by the terminal equipment is a key problem that needs to be solved currently.

For at least one of the above problems, the embodiments of the present disclosure provide a method and an apparatus for mapping channel state information.

According to one aspect of the embodiments of the present disclosure, a method for mapping channel state information (CSI) is provided, including:

a terminal equipment receives a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;

the terminal equipment receives indication information, the indication information being used to trigger (indicate/activate) N sub-configurations in the P sub-configurations, where $1 \leq N \leq P$; and

the terminal equipment determines a CSI report at least according to a CSI field mapping order, wherein the CSI report includes at least one piece of CSI corresponding to the N sub-configurations.

According to another aspect of the embodiments of the present disclosure, an apparatus for mapping channel state information is provided, the apparatus including:

a first receiving unit, configured to receive a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;
a second receiving unit, configured to receive indication information, the indication information being used to trigger (indicate/activate) N sub-configurations in the P sub-configurations, where $1 \leq N \leq P$; and
a processing unit, configured to determine a CSI report at least according to a CSI field mapping order, wherein the CSI report includes at least one piece of CSI corresponding to the N sub-configurations.

According to another aspect of the embodiments of the present disclosure, a method for mapping a channel state information (CSI) report is provided, including:

a network device transmits a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;
the network device transmits indication information, the indication information being used to trigger (indicate/activate) N sub-configurations in the P sub-configurations, where $1 \leq N \leq P$; and a terminal equipment determines a CSI report at least according to a CSI field mapping order, wherein the CSI report includes at least one piece of CSI corresponding to the N sub-configurations.

According to another aspect of the embodiments of the present disclosure, an apparatus for mapping channel state information is provided, the apparatus including:

a first transmitting unit, configured to transmit a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$; and
a second transmitting unit, configured to transmit indication information, the indication information being used to trigger (indicate/activate) N sub-configurations in the P sub-configurations, where $1 \leq N \leq P$; and a terminal equipment determines a CSI report at least according to a CSI field mapping order, wherein the CSI report includes at least one piece of CSI corresponding to the N sub-configurations.

According to a further aspect of the embodiments of the present disclosure, a communication system is provided, including:

a network device, configured to transmit a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$; and to transmit indication information, the indication information being used to trigger (indicate/activate) N sub-configurations in the P sub-configurations, where $1 \leq N \leq P$; and
a terminal equipment, configured to determine a CSI report at least according to a CSI field mapping order, wherein the CSI report includes at least one piece of CSI corresponding to the N sub-configurations.

One of advantageous effects of the embodiments of the present disclosure lies in: even in some scenarios (such as an energy-saving mode) of wireless communication applications, a terminal equipment is still able to perform CSI mapping accurately, thereby transmitting a CSI report efficiently and accurately, CSI reporting overhead may be saved and uplink resources may be saved.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

FIG. 1 is a schematic diagram of a communication system in the embodiments of the present disclosure;
FIG. 2 is a schematic diagram of a method for mapping channel state information in the embodiments of the present disclosure;
FIG. 3 is a schematic diagram of a method for mapping channel state information in the embodiments of the present disclosure;
FIG. 4 is a schematic diagram of an apparatus for mapping channel state information in the embodiments of the present disclosure;
FIG. 5 is a schematic diagram of an apparatus for mapping channel state information in the embodiments of the present disclosure;
FIG. 6 is a schematic diagram of a network device in the embodiments of the present disclosure; and
FIG. 7 is a schematic diagram of a terminal equipment in the embodiments of the present disclosure.

DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited thereto.

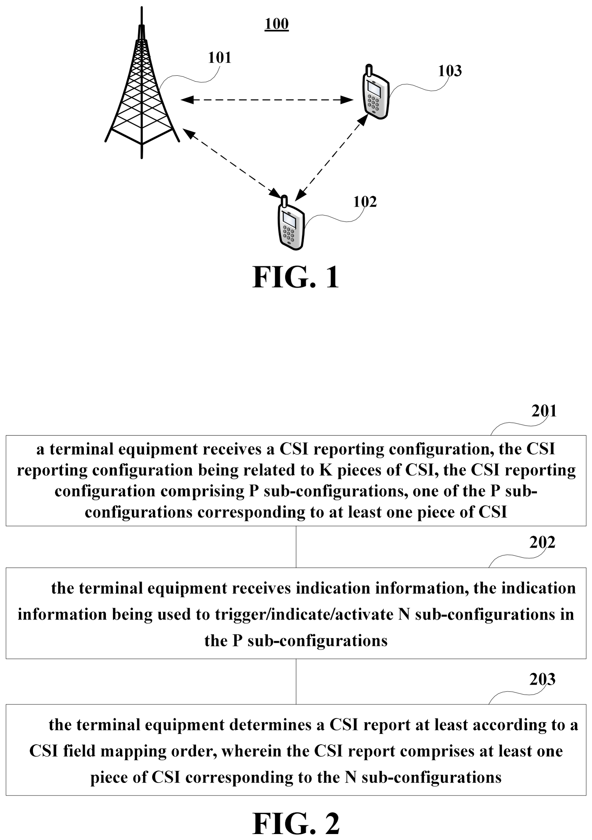

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, higher layer signaling may be e.g. radio resource control (RRC) signaling; for example, is called an RRC message, for example includes an MIB, system information, and a dedicated RRC message; or is called an RRC information element (RRC IE). The higher layer signaling, for example, may further be Medium Access Control (MAC) signaling; or called a MAC control element (MAC CE). However, the present disclosure is not limited thereto.

In a mobile communication system, generally a terminal equipment performs Channel State Information (CSI) measurement according to indication and configuration of a network device, and then reports CSI obtained by measurement to the network device. When the network device schedules the terminal equipment, it may refer to this CSI so as to adopt an appropriate transmission mode on an appropriate resource to schedule the terminal equipment to perform transmission. Different terminal equipments may experience different physical channel conditions. Adopting a CSI feedback mechanism may rationally and effectively utilize resources, thereby improving the efficiency of entire network transmission.

In the CSI feedback mechanism of NR, the terminal equipment measures a reference signal based on a CSI configuration and performs reporting. The CSI may include a Channel Quality Indicator (CQI), a Precoding Matrix Indicator (PMI), a CSI-RS Resource Indicator (CRI), a synchronization signal/physical broadcast channel (SS/PBCH) Resource Indicator (SSBRI), a Layer Indicator (LI), a Rank Indication (RI).

In a CSI report framework of the NR, it is carried out by associating a CSI resource (for measurement) via a CSI report (for reporting). The CSI report may be configured as the following three types: a periodic CSI report (P-CSI): transmitted only on a Physical Uplink Control Channel (PUCCH); a semi-persistent CSI report (SP-CSI): transmitted on a PUCCH or a Physical Uplink Shared Channel (PUSCH); an aperiodic CSI report (AP-CSI): transmitted only on a PUSCH.

The following text first describes PUSCH-based CSI reporting. PUSCH-based CSI reporting supports TypeI wideband or subband CSI, meanwhile also supports Type II CSI, as shown in Table 1 below.

Table 1

| Physical channel | Frequency-domain granularity | CSI composition | Time-domain characteristic | Codebook type |
|---|---|---|---|---|
| PUSCH | Wideband / subband | Part1-Part2 | Semi-persistent / aperiodic | TypeI/ TypeII |

For PUSCH-based TypeI, TypeII and enhanced TypeII CSI, a CSI report consists of two parts (Part 1 and Part 2), in which CSI Part 1 (may also be called Part 1) has a fixed load size and indicates the number of information bits of CSI Part 2 (may also be called Part 2).

For TypeI CSI reporting: Part 1 may include one or more of a rank indicator (RI), a CSI-RS resource indicator (CRI), and a channel quality indicator (CQI) of a first codeword; Part 2 contains one or more of a precoding matrix indicator (PMI) and a CQI of a second codeword.

For TypeII CSI reporting: Part 1 includes one or more of an RI, a CQI and a non-zero wideband amplitude number indicator per layer of TypeII CSI; Part 2 contains a PMI of Type II CSI.

For enhanced TypeII CSI reporting: Part 1 includes an RI, a CQI, and an indication of the total number of cross-layer zero amplitude coefficients of enhanced Type II CSI; Type II contains a PMI of the enhanced Type II CSI.

When CSI reported based on a PUSCH contains Part 1 and Part 2, the terminal equipment (UE) may omit some content of Part 2. An omission rule for Part 2 is in descending order of a priority, and the priority order is consistent with CSI field mapping order tables reported based on the PUSCH.

The following text then describes PUCCH-based CSI reporting. PUCCH-based CSI reporting supports TypeI wideband or subband CSI, meanwhile also supports Type II CSI, as shown in Table 2 below.

Table 2

| Physical channel | Frequency-domain granularity | CSI composition | Time-domain characteristic | Codebook type |
|---|---|---|---|---|
| Short PUCCH | Wideband | Not split | Periodic, semi-persistent | TypeI |
| Long PUCCH | Wideband | Not split | Periodic, semi-persistent | TypeI |
| Long PUCCH | Subband | Part1-Part2 | Semi-persistent | TypeI |
| Long PUCCH | Wideband | Part1 | Semi-persistent | TypeII |

Periodic CSI reporting based on PUCCH formats 2, 3, and 4 supports wideband TypeI CSI;

Semi-persistent CSI reporting based on PUCCH format 2 supports wideband TypeI CSI;

Semi-persistent CSI reporting based on PUCCH format 3 or 4 supports wideband and subband TypeI CSI, and TypeII CSI Part 1:

for subband TypeI CSI and reporting based on PUCCH format 3 or 4, a CSI load may be divided into two parts (Part1 and Part2). Part1 includes part of all of an RI, a CRI, and a CQI corresponding to a first codeword, and Part2 includes a **PMI** and a CQI corresponding to a second codeword.

If a CSI report contains two parts, i.e., PartI and Part2, the terminal equipment (UE) may omit part of the content of Part2, and a priority order is consistent with CSI field mapping order tables reported based on a PUCCH.

The following text describes PUSCH-based CSI field mapping. Table 3 schematically shows some cases of CSI part 1.

Table 3 CSI Part 1

| CSI report number | CSI fields |
|---|---|
| | CRI as in Tables 6.3.1.1.2-3/4/6, if reported |
| | Rank Indicator as in Tables 6.3.1.1.2-3/4/5 or 6.3.2.1.2-8, if reported |
| | Wideband CQI for the first TB as in Tables 6.3.1.1.2-3/4/5 or 6.3.2.1.2-8, if reported |
| | Subband differential CQI for the first TB with increasing order of subband number as in Tables 6.3.1.1.2-3/4/5 or 6.3.2.1.2-8, if reported |

(continued)

| CSI report number | CSI fields |
|---|---|
| CSI report #n<br>CSI part 1 | Indicator of the number of non-zero wideband amplitude coefficients $M_0$ for layer 0 as in Table 6.3.1.1.2-5, if reported |
| | Indicator of the number of non-zero wideband amplitude coefficients $M_1$ for layer 1 as in Table 6.3.1.1.2-5 (if the rank according to the reported RI is equal to one, this field is set to all zeros), if 2-layer PMI reporting is allowed according to the rank restriction in Clauses 5.2.2.2.3 and 5.2.2.2.4 [6, TS 38.214] and if reported |
| | Indicator of the total number of non-zero coefficients summed across all layers $K^{NZ}$ as in Table 6.3.2.1.2-8, if reported |
| Note: Subbands for given CSI report n indicated by the higher layer parameter csi-ReportingBand are numbered continuously in the increasing order with the lowest subband of csi-ReportingBand as subband 0. | |

Table 4 schematically shows some cases of CSI part 2.

Table 4 CSI Part 2 Wideband for Type I

| CSI report number | CSI fields |
|---|---|
| CSI report #n<br>CSI part 2 wideband | Wideband CQI for the second TB as in Tables 6.3.1.1.2-3/4/5, if present and reported |
| | Layer Indicator as in Tables 6.3.1.1.2-3/4/5, if reported |
| | PMI wideband information fields $X_1$, from left to right as in Tables 6.3.1.1.2-1/2 or 6.3.2.1.2-1/2, if reported |
| | PMI wideband information fields $X_2$, from left to right as in Tables 6.3.1.1.2-1/2 or 6.3.2.1.2-1/2, or codebook index for 2 antenna ports according to Clause 5.2.2.2.1 in [6, TS38.214], if pmi-FormatIndicator= widebandPMI and if reported |

Table 5 schematically shows some cases of CSI part 2.

Table5 CSI Part 2 Subband for Type I

| | |
|---|---|
| CSI report #n<br><br><br><br>Part 2 subband | Subband differential CQI for the second TB of all even subbands with increasing order of subband number, as in Tables 6.3.1.1.2-3/4/5, if cqi-FormatIndicator=subbandCQI and if reported |
| | PMI subband information fields $X_2$ of all even subbands with increasing order of subband number, from left to right as in Tables 6.3.1.1.2-1/2 or 6.3.2.1.2-1/2, or codebook index for 2 antenna ports according to Clause 5.2.2.2.1 in [6, TS38.214] of all even subbands with increasing order of subband number, if pmi-FormatIndicator= subbandPMI and if reported |
| | Subband differential CQI for the second TB of all odd subbands with increasing order of subband number, as in Tables 6.3.1.1.2-3/4/5, if cqi-FormatIndicator=subbandCQI and if reported |
| | PMI subband information fields $X_2$ of all odd subbands with increasing order of subband number, from left to right as in Tables 6.3.1.1.2-1/2 or 6.3.2.1.2-1/2, or codebook index for 2 antenna ports according to Clause 5.2.2.2.1 in [6, TS38.214] of all odd subbands with increasing order of subband number, if pmi-FormatIndicator= subbandPMI and if reported |

The above text schematically describes some cases of PUSCH-based CSI field mapping. For related contents, the 38.212 protocol may further be referred to. The following text then schematically describes PUCCH-based CSI field mapping.

Table 6 schematically shows some cases of the TypeI wideband CSI. Table 6 is a PUCCH-based CSI field mapping table in which pmi-FormatIndicator = widebandPMI and cqi-FormatIndicator = widebandCQI or reportQuantity set to 'cri-RI-CQI' and cqi-FormatIndicator = widebandCQI.

Table 6 TypeI wideband CSI

| (PUCCH-based periodic CSI reporting and PUCCH-based format2 semi-persistent CSI reporting): | |
|---|---|
| CSI report number | CSI fields |
| CSI report #n | CRI as in Tables 6.3.1.1.2-3/4, if reported |
| | Rank Indicator as in Tables 6.3.1.1.2-3/4, if reported |
| | Layer Indicator as in Tables 6.3.1.1.2-3/4, if reported |
| | Zero padding bits $O_p$, if needed |
| | PMI wideband information fields $X_1$, from left to right as in Tables 6.3.1.1.2-1/2, if reported |
| | PMI wideband information fields $X_2$, from left to right as in Tables 6.3.1.1.2-1/2, or codebook index for 2 antenna ports according to Clause 5.2.2.2.1 in [6, TS38.214], if reported |
| | Wideband CQI for the first TB as in Tables 6.3.1.1.2-3/4, if reported |
| | Wideband CQI for the second TB as in Tables 6.3.1.1.2-3/4, if reported |

Table 7 schematically shows some cases of CSI Part 1. Table 7 schematically shows PUCCH-based format2, 3, 4 semi-persistent CSI reporting with pmi-FormatIndicator = subbandPMI or cqi-FormatIndicator = subbandCQI.

Table 7

| CSI report number | CSI fields |
|---|---|
| CSI report #n CSI part 1 | CRI as in Tables 6.3.1.1.2-3/4, if reported |
| | Rank Indicator as in Tables 6.3.1.1.2-3/4/5, if reported |
| | Wideband CQI for the first TB as in Tables 6.3.1.1.2-3/4/5, if reported |
| | Subband differential CQI for the first TB with increasing order of subband number as in Tables 6.3.1.1.2-3/4/5, if reported |
| | Indicator of the number of non-zero wideband amplitude coefficients $M_0$ for layer 0 as in Table 6.3.1.1.2-5, if reported |
| | Indicator of the number of non-zero wideband amplitude coefficients $M_1$ for layer 1 as in Table 6.3.1.1.2-5 (if the rank according to the reported RI is equal to one, this field is set to all zeros), if 2-layer PMI reporting is allowed according to the rank restriction in Clauses 5.2.2.2.3 and 5.2.2.2.4 [6, TS 38.214] and if reported |
| Note: Subbands for given CSI report n indicated by the higher layer parameter csi-ReportingBand with value set to '1' are numbered continuously in the increasing order with the lowest subband of csi-ReportingBand with value set to '1' as subband 0. | |

Table 8 schematically shows some cases of the CSI Part 2 wideband, wideband (pmi-FormatIndicator = subbandPMI or cqi-FormatIndicator = subbandCQI).

Table 8

| CSI report number | CSI fields |
|---|---|
| CSI report #n CSI part 2 wideband | Wideband CQI for the second TB as in Tables 6.3.1.1.2-3/4/5, if present and reported |
| | Layer Indicator as in Tables 6.3.1.1.2-3/4/5, if reported |
| | PMI wideband information fields $X_1$, from left to right as in Tables 6.3.1.1.2-1/2, if reported |
| | PMI wideband information fields $X_2$, from left to right as in Tables 6.3.1.1.2-1/2, or codebook index for 2 antenna ports according to Clause 5.2.2.2.1 in [6, TS38.214], if pmi-FormatIndicator= widebandPMI and if reported |

Table 9 schematically shows some cases of the CSI Part 2 subband, subband (pmi-FormatIndicator = subbandPMI or cqi-FormatIndicator = subbandCQI).

Table 9

| CSI report #n | Subband differential CQI for the second TB of all even subbands with increasing order of subband number, as in Tables 6.3.1.1.2-3/4/5, if cqi-FormatIndicator=subbandCQI and if reported |
| | PMI subband information fields $X_2$ of all even subbands with increasing order of subband number, from left to right as in Tables 6.3.1.1.2-1/2, or codebook index for 2 antenna ports according to Clause 5.2.2.2.1 in [6, TS38.214] of all even subbands with increasing order of subband number, if pmi-FormatIndicator= subbandPMI and if reported |
| Part 2 subband | Subband differential CQI for the second TB of all odd subbands with increasing order of subband number, as in Tables 6.3.1.1.2-3/4/5, if cqi-FormatIndicator=subbandCQI and if reported |
| | PMI subband information fields $X_2$ of all odd subbands with increasing order of subband number, from left to right as in Tables 6.3.1.1.2-1/2, or codebook index for 2 antenna ports according to Clause 5.2.2.2.1 in [6, TS38.214] of all odd subbands with increasing order of subband number, if pmi-FormatIndicator= subbandPMI and if reported |

The above text schematically describes some cases of PUCCH-based CSI field mapping. For related contents, the 38.212 protocol may further be referred to.

The inventor finds that in a network energy-saving scenario, in order to alleviate a channel mutation problem caused by adjusting the number of antennas by a network device, a feasible solution is that a terminal equipment reports multiple pieces of CSI at the same reporting moment, each CSI corresponds to an antenna adjustment mode or an antenna configuration scheme, so that a network device is able to obtain accurate CSI in a timely manner to perform data scheduling, and meanwhile, it is also possible to provide recommended schemes for antenna adjustment of the network device.

In a network energy-saving scenario, the terminal equipment may report multiple pieces of CSI at the same reporting moment, the multiple pieces of CSI may correspond to the same CSI report configuration or may correspond to different CSI report configurations. When a CSI report includes multiple pieces of CSI (for example, each CSI corresponds to an antenna adjustment mode or antenna configuration scheme), there are no clear regulations or descriptions in existing protocols on how should a CSI field mapping, etc. Therefore, in case of multi-CSI reporting, a mapping order of CSI fields has become an urgent problem to be solved in current 3GPP standardization. The following text takes an energy-saving scenario as an example for description, but the present disclosure is not limited thereto, and may be applied to any scenario involving a channel state information report.

Embodiments of a first aspect

Embodiments of the present disclosure provide a method for mapping channel state information, which is described from a terminal equipment side. FIG. 2 is a schematic diagram of a method for mapping channel state information in the embodiments of the present disclosure. As shown in FIG. 2, the method includes:

201, a terminal equipment receives a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;

202, the terminal equipment receives indication information, the indication information being used to trigger/indicate/activate N sub-configurations in the P sub-configurations, where $1 \leq N \leq P$; and

203, the terminal equipment determines a CSI report at least according to a CSI field mapping order, wherein the CSI report includes at least one piece of CSI corresponding to the N sub-configurations.

It should be noted that the above FIG. 2 only schematically describes the embodiments of the present disclosure, but the present disclosure is not limited thereto. For example, an execution step of each operation may be adjusted appropriately, moreover other some operations may be added or one or more operations may be removed. Persons skilled in the art may make appropriate modifications according to the above contents, not limited to the records in the above FIG. 2.

In some embodiments, one CSI report configuration includes P CSI sub-configurations, one of the CSI sub-configurations corresponds to one CSI, for example, corresponds to one spatial domain/energy domain adjustment mode.

The terminal equipment may report N pieces of CSI at one CSI report moment, and the N pieces of CSI are associated with N CSI sub-configurations in P sub-configurations.

The terminal equipment reports a CSI report at a CSI report time, the CSI report including a first CSI, a second CSI......a Nth CSI which correspond to sub-configuration 1, sub-configuration 2......sub-configuration N of the CSI respectively, different sub-configurations correspond to different spatial domain/energy domain adjustment modes.

By taking N = 4 as an example, the CSI report includes four pieces of CSI, the first CSI (CSI of sub-configuration 1) corresponds to a CSI-RS 32-port spatial domain adjustment mode, the second CSI (CSI of sub-configuration 2) corresponds to a 16-port spatial domain adjustment mode, the third CSI (CSI of sub-configuration 3) corresponds to an 8-port spatial domain adjustment mode, and the fourth CSI (CSI of sub-configuration 4) corresponds to a 4-port spatial domain adjustment mode.

In some embodiments, the first CSI is a baseline CSI. By taking "a CSI-RS resource set includes a plurality of resources, each resource being associated with at least one spatial domain adjustment mode" as an example, each resource is associated with four spatial domain adjustment modes, and the four spatial domain adjustment modes correspond to 32-port, 16-port, 8-port and 4-port respectively, the 16-port, 8-port and 4-port are subsets of the 32-port, that is, resources associated with the second CSI, the third CSI and the fourth CSI are subsets of resources associated with the first CSI, partial information of the second CSI, the third CSI and the fourth CSI may be obtained from the first CSI, thus the first CSI is a baseline CSI.

In the embodiments of the present disclosure, for ease of description, CSIs of sub-configuration 1, sub-configuration 2... sub-configuration N may replace the first CSI, the second CSI......the Nth CSI. The sub-configuration may be replaced by a group, a configuration, a mode, a pattern, a sub-group, a sub-mode, or a sub-pattern, etc.

In some embodiments, the sub-configuration includes at least one of the following information: parameter N1; parameter N2; parameter Ng; a codebook subset restriction; or port information, the port information being used to indicate partial ports of channel state information reference signal (CSI-RS) resources associated with the channel state information (CSI) report configuration.

For example, the port information indicates partial ports or port subsets in the form of a bitmap, wherein each bit in the bitmap represents a port, a code division multiplexing (CDM) group, or a predefined port group.

In some embodiments, the sub-configuration is included in sub-configuration information (sub-config) of the channel state information (CSI) report configuration, or is included in codebook configuration information (codebook config) of the channel state information (CSI) report configuration, or is included in parameter configuration information (N1-N2 config) of the channel state information (CSI) report configuration.

For example, the CSI report configuration includes a sub-config list, one sub-config in the list including codebook configuration information (codebook config or codebook Type or a codebook subset restriction, N1, N2 and Ng) and/or port information; or the CSI report configuration includes P sub-configurations, i.e., sub-config1 to sub-config P, each sub-config including codebook configuration information (codebook config or codebook Type or a codebook subset restriction) and/or port information.

For another example, the codebook configuration (codebook config) in the CSI report configuration includes codebook configuration 1 to codebook configuration P, corresponding to P sub-configurations respectively, one of codebook configuration 1 to codebook configuration P including information such as a codebook subset restriction, N1, N2 and Ng; port information indicated by a port subset does not need to be obtained via explicit indication information, and may be obtained via other predefined modes or implicit modes.

For another example, the codebook configuration (codebook config) in the CSI report configuration includes N1-N2 1 to N1-N2 P, corresponding to P sub-configurations respectively, one of codebook configuration 1 to codebook configuration P including information such as N1, N2 and Ng; port information indicated by a port subset does not need to be obtained via explicit indication information, and may be obtained via other predefined modes or implicit modes; in the CSI report configuration, only one common codebook subset restriction parameter is configured, codebook subset restriction information of each sub-configuration is obtained from the common codebook subset restriction parameter based on parameters N1, N2 and Ng.

In some embodiments, the channel state information (CSI) report configuration may be configured via RRC signaling, and the indication information may be DCI or an MAC CE. The indication information is used to indicate the terminal equipment to report a CSI report at a CSI reporting time, the CSI report including N pieces of CSI, i.e., a first CSI, a second CSI... a Nth CSI, that is, a CSI of sub-configuration 1, a CSI of sub-configuration 2... a CSI of sub-configuration N.

For example, the terminal equipment determines CSI field information of CSI Part1, Part 2 wideband or Part2 subband of the PUSCH-based CSI report according to one of the CSI field information, a bit width, and the following CSI field mapping orders. After determining the CSI field information of the CSI report, the terminal equipment performs CSI reporting at a CSI reporting moment.

In some embodiments, the CSI report includes CSI Part 1 and CSI Part 2; the N sub-configurations include an ith sub-configuration, where $1 \leq i \leq N$, and one of the N sub-configurations corresponds to one piece of CSI.

The following text further describes the CSI field mapping by taking the PUSCH-based CSI reporting as an example.

In some embodiments, in the CSI Part 1, the CSI field mapping order includes: mapping first information corresponding to the first L sub-configurations in the N sub-configurations according to a sub-configuration index ascending order, where $1 \leq L \leq N$.

In some embodiments, the first information corresponding to one sub-configuration includes at least one of the following: a CSI-RS resource indicator (CRI) corresponding to the sub-configuration, a rank indicator corresponding to the sub-configuration, a wideband CQI for a first transport (TB) corresponding to the sub-configuration, a subband differential CQI corresponding to the sub-configuration, or coefficient information corresponding to the sub-configuration.

For example, the first information corresponding to the first few sub-configurations may be mapped according to a sub-configuration index ascending order.

Table 10 shows an example of CSI field mapping of the CSI Part1.

Table 10

| CSI report number | CSI fields |
|---|---|
| CSI report #n<br><br>CSI part 1 | CRI of sub-configuration 1, if reported; |
| | Rank Indicator of sub-configuration 1, if reported; |
| | Wideband CQI of sub-configuration 1, if reported; |
| | Subband differential CQI of sub-configuration 1, if reported; |
| | Indicator of the number of layer 0 non-zero amplitude coefficients $M_0$ of sub-configuration 1, if reported; |
| | Indicator of the number of layer 1 zero amplitude coefficients $M_1$ of sub-configuration 1, if reported; |
| | (If RI=1 is reported, this field will be all zero) |
| | Sum $K^{NZ,i}$ of non-zero coefficients of all layers, if reported |

As shown in Table 10, CRI of sub-configuration 1 > RI of sub-configuration 1 > Wideband CQI of sub-configuration 1 > Subband differential CQI of sub-configuration 1 > non-zero amplitude coefficient. CSI Part 1 only includes CSI information of sub-configuration 1, and information of sub-configurations 2 to N is included in CSI Part2.

In some embodiments, in the CSI Part 1, the CSI field mapping order includes: mapping first information corresponding to the first L sub-configurations in the N sub-configurations according to a sub-configuration index ascending order; mapping the first information corresponding to the last N-L sub-configurations in the N sub-configurations according to a sub-configuration index ascending order, where $1 \leq L \leq N$.

For example, mapping of the N sub-configurations may be divided into two front and back parts: the front part is the first L sub-configurations, and the back part is the last N-L sub-configurations, each part performs mapping using mapping mode A and mapping mode B respectively. Mapping mode A is to first sort according to information types, and then sort according to sub-configurations in each information type; mapping mode B is to first sort according to sub-configurations, and then sort according to information types in each sub-configuration.

In some embodiments, mapping the first information corresponding to the first L sub-configurations in the N sub-configurations according to a sub-configuration index ascending order includes:

mapping CSI-RS resource indicator (CRI) corresponding to 0 or one or more sub-configuration in the L sub-configurations according to a sub-configuration index ascending order;
mapping rank indicator corresponding to 0 or one or more sub-configuration in the L sub-configurations according to a sub-configuration index ascending order;
mapping wideband CQI corresponding to 0 or one or more sub-configuration in the L sub-configurations according to a sub-configuration index ascending order;
mapping subband differential CQI corresponding to 0 or one or more sub-configuration in the L sub-configurations according to a sub-configuration index ascending order;
mapping coefficient information corresponding to 0 or one or more sub-configuration in the L sub-configurations according to a sub-configuration index ascending order.

In these embodiments, for example, CRIs of the L sub-configurations are mapped first, then RIs of the L sub-configurations are mapped, then the wideband CQI of the L sub-configurations is mapped, then the subband differential CQI of the L sub-configurations is mapped, and finally the coefficient information of the L sub-configurations is mapped. If one or more pieces of the above information is not reported, mapping may be omitted. This mapping mode may be called mapping mode A.

In some embodiments, mapping the first information corresponding to the first L sub-configurations in the N sub-configurations according to a sub-configuration index ascending order includes:

mapping first information corresponding to the L sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

In these embodiments, for example, a CRI, an RI, wideband CQI, subband differential CQI and coefficient information of a first sub-configuration are mapped first, then a CRI, an RI, wideband CQI, subband differential CQI and coefficient information of a second sub-configuration are mapped, ......, then a CRI, an RI, wideband CQI, subband differential CQI and coefficient information of an Lth sub-configuration are mapped. If one or more pieces of the above information is not reported, mapping may be omitted. This mapping mode may be called mapping mode B.

In some embodiments, mapping the first information corresponding to the last N-L sub-configurations in the N sub-configurations according to a sub-configuration index ascending order includes:

mapping CSI-RS resource indicator (CRI) corresponding to 0 or one or more sub-configuration in the last N-L sub-configurations according to a sub-configuration index ascending order;
mapping rank indicator corresponding to 0 or one or more sub-configuration in the last N-L sub-configurations according to a sub-configuration index ascending order;
mapping wideband CQI corresponding to 0 or one or more sub-configuration in the last N-L sub-configurations according to a sub-configuration index ascending order;
mapping subband differential CQI corresponding to 0 or one or more sub-configuration in the last N-L sub-configurations according to a sub-configuration index ascending order;
mapping coefficient information corresponding to 0 or one or more sub-configuration in the last N-L sub-configurations according to a sub-configuration index ascending order.

In these embodiments, for example, CRIs of the last N-L sub-configurations are mapped first, then RIs of the last N-L sub-configurations are mapped, then the wideband CQI of the last N-L sub-configurations is mapped, then the subband differential CQI of the last N-L sub-configurations is mapped, and finally the coefficient information of the last N-L sub-configurations is mapped. If one or more pieces of the above information is not reported, mapping may be omitted. This mapping mode may be called mapping mode A.

In some embodiments, mapping the first information corresponding to the N-L sub-configurations in the last N sub-configurations according to a sub-configuration index ascending order includes:

mapping first information corresponding to the last N-L sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

In these embodiments, for example, a CRI, an RI, wideband CQI, subband differential CQI and coefficient information of an (L+1)th sub-configuration are mapped first, then a CRI, an RI, wideband CQI, subband differential CQI and coefficient information of an (L+2)th sub-configuration are mapped, ......, then a CRI, an RI, wideband CQI, subband differential CQI and coefficient information of an Nth sub-configuration are mapped. If one or more pieces of the above information is not reported, mapping may be omitted. This mapping mode may be called mapping mode B.

Table 11 shows an example of the CSI field mapping of the CSI Part1, taking "L=N, i.e., there is only the former part, this former part is all the sub-configurations, and all the sub-configurations use the mapping mode A" as an example.

Table 11

| CSI report number | CSI fields |
| --- | --- |
| | CRI of sub-configuration 1, if reported; |

(continued)

| CSI report number | CSI fields |
|---|---|
| CSI report #n<br><br>CSI part 1 | ...... |
| | CRI of sub-configuration N, if reported; |
| | Rank Indicator of sub-configuration 1, if reported; |
| | ...... |
| | Rank Indicator of sub-configuration N, if reported; |
| | Wideband CQI of sub-configuration 1, if reported; |
| | ...... |
| | Wideband CQI of sub-configuration N, if reported; |
| | Subband differential CQI of sub-configuration 1, if reported; |
| | ...... |
| | Subband differential CQI of sub-configuration N, if reported; |
| | Indicator of the number of layer 0 non-zero amplitude coefficients $M_0$ of sub-configuration 1, if reported; |
| | Indicator of the number of layer 1 zero amplitude coefficients $M_1$ of sub-configuration 1, if reported (if RI=1 is reported, this field will be all zero) |
| | Sum $K^{NZ,i}$ of non-zero coefficients of all layers of sub-configuration 1, if reported |
| | ...... |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

As shown in Table 11, the CSI field mapping order of the CSI Part1, for example, is: CRI of sub-configuration 1 > ... > CRI of sub-configuration N > RI of sub-configuration 1 > ... > RI of sub-configuration N > Wideband CQI of sub-configuration 1 > ... > Wideband CQI of sub-configuration N > Subband differential CQI of sub-configuration 1 > ... > Subband differential CQI of sub-configuration N > coefficient information of sub-configuration 1 > ... > coefficient information of sub-configuration N.

Table 12 shows another example of the CSI field mapping of the CSI Part1, taking "L = 1 and both the former part (the first L sub-configurations) and the latter part (the last N-L sub-configurations) use the mapping mode B, or L = N and there is only the former part, this former part is all the sub-configurations, the mapping mode B is applicable" as an example.

Table 12

| CSI report number | CSI fields |
|---|---|
| CSI report #n<br>CSI part 1 | CRI of sub-configuration 1, if reported; |
| | Rank Indicator of sub-configuration 1, if reported; |
| | Wideband CQI of sub-configuration 1, if reported; |
| | Subband differential CQI of sub-configuration 1, if reported; |
| | Indicator of the number of layer 0 non-zero amplitude coefficients $M_0$ of sub-configuration 1, if reported |
| | Indicator of the number of layer 1 zero amplitude coefficients $M_1$ of sub-configuration 1, if reported (if RI=1 is reported, this field will be all zero) |
| | Sum $K^{NZ,i}$ of non-zero coefficients of all layers of sub-configuration 1, if reported |

(continued)

| CSI report number | CSI fields |
|---|---|
| | ...... |
| | CRI of sub-configuration N, if reported; |
| | Rank Indicator of sub-configuration N, if reported; |
| | Wideband CQI of sub-configuration N, if reported; |
| | Subband differential CQI of sub-configuration N, if reported; |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

Table 13 shows another example of the CSI field mapping of the CSI Part1, taking "L = 1 and the former part (the first L sub-configurations) uses the mapping mode B, and the latter part (the last N-L sub-configurations) uses the mapping mode A" as an example.

Table 13

| CSI report number | CSI fields |
|---|---|
| CSI report #n<br><br>CSI part 1 | CRI of sub-configuration 1, if reported; |
| | Rank Indicator of sub-configuration 1, if reported; |
| | Wideband CQI of sub-configuration 1, if reported; |
| | Subband differential CQI of sub-configuration 1, if reported; |
| | Indicator of the number of layer 0 non-zero amplitude coefficients $M_0$ of sub-configuration 1, if reported |
| | Indicator of the number of layer 1 zero amplitude coefficients $M_1$ of sub-configuration 1, if reported (if RI=1 is reported, this field will be all zero) |
| | CRI of sub-configuration 2, if reported; |
| | ...... |
| | CRI of sub-configuration N, if reported; |
| | Rank Indicator of sub-configuration 2, if reported; |
| | ...... |
| | Rank Indicator of sub-configuration N, if reported; |
| | Wideband CQI of sub-configuration 2, if reported; |
| | ...... |
| | Wideband CQI of sub-configuration N, if reported; |
| | Subband differential CQI of sub-configuration 2, if reported; |
| | ...... |
| | Subband differential CQI of sub-configuration N, if reported; |
| | Indicator of the number of layer 0 non-zero amplitude coefficients $M_0$ of sub-configuration 2, if reported |
| | Indicator of the number of layer 1 zero amplitude coefficients $M_1$ of sub-configuration 2, if reported (if RI=1 is reported, this field will be all zero) |
| | Sum $K^{NZ,i}$ of non-zero coefficients of all layers of sub-configuration 2, if reported |

(continued)

| CSI report number | CSI fields |
|---|---|
| | ...... |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

The above takes Tables 11 to 13 as examples to exemplarily describe some cases of CSI field mapping of the CSI Part1, however the present disclosure is not limited thereto. Tables 11 to 13 correspond to some cases of complete reporting (without CSI overhead reduction), and in some cases, some information may further be omitted.

In some embodiments, the CRI corresponding to the N sub-configurations includes: CRI corresponding to the first M sub-configurations, CRI corresponding to the remaining N-M sub-configurations is omitted, where $1 \leq M \leq N$; and/or

the rank indicator corresponding to the N sub-configurations includes: rank indicator corresponding to the first M sub-configurations, rank indicators corresponding to the remaining N-M sub-configurations are omitted, where $1 \leq M \leq N$; and/or
the wideband CQI corresponding to the N sub-configurations includes: wideband CQI corresponding to the first M sub-configurations, wideband CQI corresponding to the remaining N-M sub-configurations is omitted, where $1 \leq M \leq N$; and/or
the subband differential CQI corresponding to the N sub-configurations includes: subband differential CQI corresponding to the first M sub-configurations, subband differential CQI corresponding to the remaining N-M sub-configurations is omitted, where $1 \leq M \leq N$; and/or
the coefficient information corresponding to the N sub-configurations includes: coefficient information corresponding to the first M sub-configurations, coefficient information corresponding to the remaining N-M sub-configurations is omitted, where $1 \leq M \leq N$.

For example, CRI/RI/CQI of the sub-configuration M are the same as CRI/RI/CQI of the sub-configuration 1, or the network device is able to derive the CRI/RI/CQI of the sub-configuration M based on the CRI/RI/CQI of the sub-configuration 1, and the terminal equipment only needs to report the CRI/RI/ PMI of the sub-configuration 1, the CRI/RI/CQI of the sub-configuration M may be omitted to be reported, where $1 \leq M \leq N$.

Table 14 shows another example of the CSI field mapping of the CSI Part1, taking "L = N, there is only the former part, this former part is all the sub-configurations, the mapping mode A is used" as an example.

Table 14

| CSI report number | CSI fields |
|---|---|
| CSI report #n<br>CSI part 1 | CRI of sub-configuration 1, if reported; |
| | Rank Indicator of sub-configuration 1, if reported; |
| | ...... |
| | Rank Indicator of sub-configuration N, if reported; |
| | Wideband CQI of sub-configuration 1, if reported; |
| | ...... |
| | Wideband CQI of sub-configuration N, if reported; |
| | Subband differential CQI of sub-configuration 1, if reported; |
| | ...... |
| | Subband differential CQI of sub-configuration N, if reported; |
| | Indicator of the number of layer 0 non-zero amplitude coefficients $M_0$ of sub-configuration 1, if reported |

(continued)

| CSI report number | CSI fields |
|---|---|
| | Indicator of the number of layer 1 zero amplitude coefficients $M_1$ of sub-configuration 1, if reported (if RI=1 is reported, this field will be all zero) |
| | Sum $K^{NZ,i}$ of non-zero coefficients of all layers of sub-configuration 1, if reported |
| | ...... |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

As shown in Table 14, based on Table 11, only the CRI of sub-configuration 1 is reported, and the CRIs of sub-configurations 2 to N are omitted and do not need to be reported. For example, CRI of sub-configuration 1 > RI of sub-configuration 1 > ... > RI of sub-configuration N > Wideband CQI of sub-configuration 1 > coefficient information of sub-configuration 1 >... > Wideband CQI of sub-configuration N > Subband differential CQI of sub-configuration 1 > ... > Subband differential CQI of sub-configuration N > coefficient information of sub-configuration N.

For another example, based on Table 11, only the RI of sub-configuration 1 may also be reported, and the RIs of sub-configurations 2 to N are omitted and do not need to be reported. Or, based on Table 11, only the CQI of sub-configuration 1 is reported, and the CQIs of sub-configurations 2 to N are omitted and do not need to be reported.

Table 15 shows another example of the CSI field mapping of the CSI Part1, taking "L=1 and both the former part (L sub-configurations) and the latter part (N-L sub-configurations) use the mapping mode B, or L=N and there is only the former part, this former part is all the sub-configurations, the mapping mode B is used" as an example.

Table 15

| CSI report number | CSI fields |
|---|---|
| CSI report #n<br><br>CSI part 1 | CRI of sub-configuration 1, if reported; |
| | Rank Indicator of sub-configuration 1, if reported; |
| | Wideband CQI of sub-configuration 1, if reported; |
| | Subband differential CQI of sub-configuration 1, if reported; |
| | Indicator of the number of layer 0 non-zero amplitude coefficients $M_0$ of sub-configuration 1, if reported |
| | Indicator of the number of layer 1 zero amplitude coefficients $M_1$ of sub-configuration 1, if reported (if RI=1 is reported, this field will be all zero) |
| | Sum $K^{NZ,i}$ of non-zero coefficients of all layers of sub-configuration 1, if reported |
| | ...... |
| | Rank Indicator of sub-configuration N, if reported; |
| | Wideband CQI of sub-configuration N, if reported; |
| | Subband differential CQI of sub-configuration N, if reported; |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

As shown in Table 15, based on Table 12, only the CRI of sub-configuration 1 is reported, and the CRIs of sub-configurations 2 to N are omitted and do not need to be reported. For example, CRI of sub-configuration 1 > RI of sub-configuration 1 > Wideband CQI of sub-configuration 1 > Subband differential CQI of sub-configuration 1 > coefficient information of sub-configuration 1 > ... > RI of sub-configuration N > Wideband CQI of sub-configuration N > Subband differential CQI of sub-configuration N > coefficient information of sub-configuration N.

For another example, based on Table 12, only the RI of sub-configuration 1 is reported, and the RIs of sub-configurations 2 to N are omitted and do not need to be reported. Or, based on Table 12, only the CQI of sub-configuration 1 is reported, and the CQIs of sub-configurations 2 to N are omitted and do not need to be reported.

Table 16 shows another example of the CSI field mapping of the CSI Part1, taking "L = 1 and the former part (L sub-configurations) uses the mapping mode B and the latter part (N-L sub-configurations) uses the mapping mode A" as an example.

Table 16

| CSI report number | CSI fields |
|---|---|
| CSI report #n<br><br>CSI part 1 | CRI of sub-configuration 1, if reported; |
| | Rank Indicator of sub-configuration 1, if reported; |
| | Wideband CQI of sub-configuration 1, if reported; |
| | Subband differential CQI of sub-configuration 1, if reported; |
| | Indicator of the number of layer 0 non-zero amplitude coefficients $M_0$ of sub-configuration 1, if reported |
| | Indicator of the number of layer 1 zero amplitude coefficients $M_1$ of sub-configuration 1, if reported (if RI=1 is reported, this field will be all zero) |
| | Rank Indicator of sub-configuration 2, if reported; |
| | ...... |
| | Rank Indicator of sub-configuration N, if reported; |
| | Wideband CQI of sub-configuration 2, if reported; |
| | ...... |
| | Wideband CQI of sub-configuration N, if reported; |
| | Subband differential CQI of sub-configuration 2, if reported; |
| | ...... |
| | Subband differential CQI of sub-configuration N, if reported; |
| | Indicator of the number of layer 0 non-zero amplitude coefficients $M_0$ of sub-configuration 2, if reported |
| | Indicator of the number of layer 1 zero amplitude coefficients $M_1$ of sub-configuration 2, if reported (if RI=1 is reported, this field will be all zero) |
| | Sum $K^{NZ,i}$ of non-zero coefficients of all layers of sub-configuration 2, if reported |
| | ...... |
| | Indicator of the number of layer 0 non-zero amplitude coefficients $M_0$ of sub-configuration N, if reported |
| | Indicator of the number of layer 1 zero amplitude coefficients $M_1$ of sub-configuration N, if reported (if RI=1 is reported, this field will be all zero) |
| | Sum $K^{NZ,i}$ of non-zero coefficients of all layers of sub-configuration N, if reported |

As shown in Table 16, based on Table 10, only the CRI of sub-configuration 1 is reported, and the CRIs of sub-configurations 2 to N are omitted and do not need to be reported. For example, CRI of sub-configuration 1 > RI of sub-configuration 1 > Wideband CQI of sub-configuration 1 > Subband differential CQI of sub-configuration 1 > coefficient information of sub-configuration 1 > RI of sub-configuration 2 > ... > RI of sub-configuration N > Wideband CQI of sub-configuration 2 > ... > Wideband CQI of sub-configuration N > Subband differential CQI of sub-configuration 2 > ... > Subband differential CQI of sub-configuration N > coefficient information of sub-configuration 2 > ... > coefficient information of sub-configuration N.

For example, based on Table 13, only the RI of sub-configuration 1 is reported, and the RIs of sub-configurations 2 to N are omitted and do not need to be reported. The RIs of sub-configurations 2 to N are the same as the RI of sub-configuration 1, or RIs of other sub-configurations may be derived according to the RI of sub-configuration 1. For another example, based on Table 13, only the CQI of sub-configuration 1 is reported, and the CQIs of sub-configurations 2 to N are omitted and do not need to be reported. The CQIs of sub-configurations 2 to N are the same as the CQI of sub-configuration 1, or CQIs of other sub-configurations may be derived according to the CQI of sub-configuration 1.

The above exemplarily describes the CSI field mapping of the CSI Part1, the present disclosure is not limited thereto.

For example, the mapping order is: CRI of sub-configuration 1 > RI of sub-configuration 1 > Wideband CQI of sub-configuration 1 > Subband differential CQI of sub-configuration 1 > coefficient information of sub-configuration 1 > CRI of sub-configuration 2 > ... > CRI of sub-configuration N > Wideband CQI of sub-configuration 2 > ... > Wideband CQI of sub-configuration N > Subband differential CQI of sub-configuration 2 > ... > Subband differential CQI of sub-configuration N > coefficient information of sub-configuration 2 > ... > coefficient information of sub-configuration N.

For another example, the mapping order is: CRI of sub-configuration 1 > ... > CRI of sub-configuration N > RI of sub-configuration 1 > Wideband CQI of sub-configuration 1 > ... > Wideband CQI of sub-configuration N > Subband differential CQI of sub-configuration 1 > ... > Subband differential CQI of sub-configuration N > coefficient information of sub-configuration 1 > ... > coefficient information of sub-configuration N.

For another example, the mapping order is: CRI of sub-configuration 1 > RI of sub-configuration 1 > Wideband CQI of sub-configuration 1 > Subband differential CQI of sub-configuration 1 > coefficient information of sub-configuration 1 > CRI of sub-configuration 2 > Wideband CQI of sub-configuration 2 > Subband differential CQI of sub-configuration 2 > coefficient information of sub-configuration 2 > ... > CRI of sub-configuration N > Wideband CQI of sub-configuration N > Subband differential CQI of sub-configuration N > coefficient information of sub-configuration N.

In some embodiments, one or more information types may be omitted. For example, CRIs of sub-configurations 1 to N are all omitted and not reported. For example, when only one CSI-RS is configured in a CSI-RS resource set, or both the terminal equipment and the network device know a CSI-RS corresponding to each sub-configuration, i.e., a CRI of each sub-configuration, in this case, the terminal equipment does not need to report the CRI of each sub-configuration. The present disclosure is not limited thereto, other types of information may further be omitted.

For example, the mapping order is: RI of sub-configuration 1 > ... > RI of sub-configuration N > Wideband CQI of sub-configuration 1 > ... > Wideband CQI of sub-configuration N > Subband differential CQI of sub-configuration 1 > ... > Subband differential CQI of sub-configuration N > coefficient information of sub-configuration 1 > ... > coefficient information of sub-configuration N.

For another example, the mapping order is: RI of sub-configuration 1 > Wideband CQI of sub-configuration 1 > Subband differential CQI of sub-configuration 1 > coefficient information of sub-configuration 1 > RI of sub-configuration 2 > Wideband CQI of sub-configuration 2 > Subband differential CQI of sub-configuration 2 > coefficient information of sub-configuration 2 > ... > RI of sub-configuration N > Wideband CQI of sub-configuration N > Subband differential CQI of sub-configuration N > coefficient information of sub-configuration N.

For another example, the mapping order is: RI of sub-configuration 1 > Wideband CQI of sub-configuration 1 > Subband differential CQI of sub-configuration 1 > coefficient information of sub-configuration 1 > RI of sub-configuration 2 > ... > RI of sub-configuration N > Wideband CQI of sub-configuration 2 > ... > Wideband CQI of sub-configuration N > Subband differential CQI of sub-configuration 2 > ... > Subband differential CQI of sub-configuration N > coefficient information of sub-configuration 2 > ... > coefficient information of sub-configuration N.

The above exemplarily describes the cases in which some pieces of information are omitted. The following then describes the cases in which some pieces of information are differential information.

In some embodiments, the wideband CQI corresponding to the N sub-configurations includes: wideband CQI corresponding to the first M sub-configurations, wideband CQI corresponding to the remaining N-M sub-configurations is differential CQI of wideband CQI corresponding to at least one of the first M sub-configurations.

For example, the CQI of sub-configuration 1 is reported normally, the CQIs of some or all of the sub-configurations 2 to N are differential CQIs relative to sub-configuration 1. For example, based on Tables 11 to 16, the CQI of sub-configuration 1 is reported normally, the CQIs of sub-configurations 2 to N are reported as differential CQIs. Specifically, the differential wideband CQI of sub-configuration 2 is differential CQI relative to the wideband CQI of sub-configuration 1, and sub-configurations 3 to N are processed in the same way.

The above exemplarily describes CSI field mapping of the CSI Part1, and each of the above embodiments may be combined with each other.

For example, the mapping order is: CRI of sub-configuration 1 > ... > CRI of sub-configuration N > RI of sub-configuration 1 > ... > RI of sub-configuration N > Wideband CQI of sub-configuration 1 > differential Wideband CQI of sub-configuration 2 > ... > differential Wideband CQI of sub-configuration N > Subband differential CQI sub-configuration 1 > ... > Subband differential CQI of sub-configuration N > coefficient information of sub-configuration 1 > ... > coefficient information of sub-configuration N.

For another example, the mapping order is: CRI of sub-configuration 1 > RI of sub-configuration 1 > Wideband CQI of sub-configuration 1 > Subband differential CQI of sub-configuration 1 > coefficient information of sub-configuration 1 > CRI of sub-configuration 2 > RI of sub-configuration 2 > differential Wideband CQI of sub-configuration 2 > Subband differential CQI of sub-configuration 2 > coefficient information of sub-configuration 2 >... > CRI of sub-configuration N > RI of sub-configuration N > differential Wideband CQI of sub-configuration N > ... > Subband differential CQI of sub-configuration N > coefficient information of sub-configuration N.

For another example, the mapping order is: CRI of sub-configuration 1 > RI of sub-configuration 1 > Wideband CQI of sub-configuration 1 > Subband differential CQI of sub-configuration 1 > coefficient information of sub-configuration 1 > CRI of sub-configuration 2 > ... > CRI of sub-configuration N > RI of sub-configuration 2 > ... > RI of sub-configuration N > differential Wideband CQI of sub-configuration 2 > ... > differential Wideband CQI of sub-configuration N > Subband differential CQI of sub-configuration 1 > ... > Subband differential CQI of sub-configuration N > coefficient information of sub-configuration 2 >...> coefficient information of sub-configuration N.

In some embodiments, one or more information types may be omitted, and some CQIs are differential CQIs. For example, CRIs of sub-configurations 1 to N are all omitted and not reported, the CQI of sub-configuration 1 is reported normally, the CQIs of some or all of the sub-configurations 2 to N are differential CQIs relative to sub-configuration 1.

For example, the mapping order is: RI of sub-configuration 1 > ... > RI of sub-configuration N > Wideband CQI of sub-configuration 1 > differential Wideband CQI of sub-configuration 2 > ... > differential Wideband CQI of sub-configuration N > Subband differential CQI of sub-configuration 1 > ... > Subband differential CQI of sub-configuration N > coefficient information of sub-configuration 1 > ... > coefficient information of sub-configuration N.

For another example, the mapping order is: RI of sub-configuration 1 > Wideband CQI of sub-configuration 1 > Subband differential CQI of sub-configuration 1 > coefficient information of sub-configuration 1 > RI of sub-configuration 2 > differential Wideband CQI of sub-configuration 2 > Subband differential CQI of sub-configuration 2 > coefficient information of sub-configuration 2 > ... > RI of sub-configuration N > differential Wideband CQI of sub-configuration N > ... > Subband differential CQI of sub-configuration N > coefficient information of sub-configuration N.

For another example, the mapping order is: RI of sub-configuration 1 > Wideband CQI of sub-configuration 1 > Subband differential CQI of sub-configuration 1 > coefficient information of sub-configuration 1 > RI of sub-configuration 2 > ... > RI of sub-configuration N > differential Wideband CQI of sub-configuration 2 > ... > differential Wideband CQI of sub-configuration N > Subband differential CQI of sub-configuration 1 > ... > Subband differential CQI of sub-configuration N > coefficient information of sub-configuration 2 > ... > coefficient information of sub-configuration N.

In the above embodiments, CRIs of sub-configurations 1 to N are all omitted and not reported, RIs of sub-configurations 1 to N are reported normally, CQI of sub-configuration 1 is reported normally, differential CQIs of sub-configurations 2 to N relative to sub-configuration 1 are reported.

In addition, in some embodiments, CRIs of sub-configurations 1 to N are all omitted and not reported, RI of sub-configuration 1 is reported normally, RIs of sub-configurations 2 to N are omitted and not reported, CQI of sub-configuration 1 is reported normally, differential CQIs of sub-configurations 2 to N relative to sub-configuration 1 are reported.

In some embodiments, CRI of sub-configuration 1 is reported normally, CRIs of sub-configurations 2 to N are omitted and not reported, RIs of sub-configurations 1 to N are reported normally, CQI of sub-configuration 1 is reported normally, differential CQIs of sub-configurations 2 to N relative to sub-configuration 1 are reported.

In some embodiments, CRI of sub-configuration 1 is reported normally, CRIs of sub-configurations 2 to N are omitted and not reported, RI of sub-configuration 1 is reported normally, RIs of sub-configurations 2 to N are omitted and not reported, CQI of sub-configuration 1 is reported normally, differential CQIs of sub-configurations 2 to N relative to sub-configuration 1 are reported.

The above exemplarily describes the CSI field mapping of the CSI Part1, the present disclosure is not limited thereto. In the above examples, for the convenience of description, coefficient information of each sub-configuration is omitted, and in other embodiments, such coefficient information may be mapped at appropriate positions.

Accordingly, the terminal equipment performs CSI reporting based on CSI reporting field information, a bit width and a CSI field mapping order, so that the network device is able to accurately receive and demodulate CSI part1 information of multi-CSI.

The following then describes the CSI field mapping of the CSI Part2. The CSI Part2 may include some pieces of first information.

In some embodiments, in a wideband of the CSI Part 2, the CSI field mapping order is: mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI part 2, the CSI field mapping order is: mapping the first information corresponding to the last N-L sub-configurations in the N sub-configurations according to a sub-configuration index ascending order; mapping second information corresponding to the first L sub-configurations in the N sub-configurations according to a sub-configuration index ascending order;

mapping the second information corresponding to the last N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI part 2, the CSI field mapping order is: mapping the second information corresponding to the first L sub-configurations in the N sub-configurations according to a sub-configuration index ascending order; mapping the first information corresponding to the last N-L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the second information of one sub-configuration includes at least one of the following: a wideband CQI for a second transport block (TB) corresponding to the sub-configuration, LI corresponding to the sub-configuration, a first PMI wideband information field corresponding to the sub-configuration, or a second PMI wideband information field or a codebook index corresponding to the sub-configuration.

For example, similar to the CSI Part1, CSI Part 2 wideband may also divide mapping of the N sub-configurations into two front and back parts, each part performs mapping using mapping mode A and mapping mode B respectively. Mapping mode A is to first sort according to information types, and then sort according to sub-configurations in each information type; mapping mode B is to first sort according to sub-configurations, and then sort according to information types in each sub-configuration.

In some embodiments, in the wideband of the CSI Part 2, mapping the first information corresponding to the last N-L sub-configurations in the N sub-configurations according to a sub-configuration index ascending order (corresponding to the mapping mode A) includes:

mapping CSI-RS resource indicator (CRI) corresponding to 0 or one or more sub-configuration in the last N-L sub-configurations according to a sub-configuration index ascending order;

mapping rank indicator corresponding to 0 or one or more sub-configuration in the last N-L sub-configurations according to a sub-configuration index ascending order;

mapping wideband CQI corresponding to 0 or one or more sub-configuration in the last N-L sub-configurations according to a sub-configuration index ascending order;

mapping subband differential CQI corresponding to 0 or one or more sub-configuration in the last N-L sub-configurations according to a sub-configuration index ascending order;

mapping coefficient information corresponding to 0 or one or more sub-configuration in the last N-L sub-configurations according to a sub-configuration index ascending order.

In some embodiments, in the wideband of the CSI Part 2, mapping the first information corresponding to the last N-L sub-configurations in the N sub-configurations according to a sub-configuration index ascending order (corresponding to the mapping mode B) includes:

mapping first information corresponding to the N-L sub-configurations one by one according to a sub-configuration index ascending order,

wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

In some embodiments, in the wideband of the CSI Part 2, mapping the second information corresponding to the first L sub-configurations in the N sub-configurations according to a sub-configuration index ascending order (corresponding to the mapping mode A) includes:

mapping wideband CQI for a second transport block (TB) corresponding to the L sub-configurations according to a sub-configuration index ascending order;

mapping layer indicator (LI) corresponding to the L sub-configurations according to a sub-configuration index ascending order;

mapping first PMI wideband information field corresponding to the L sub-configurations according to a sub-configuration index ascending order;

mapping second PMI wideband information field or codebook index corresponding to the L sub-configurations according to a sub-configuration index ascending order.

In some embodiments, in the wideband of the CSI Part 2, mapping the second information corresponding to the first L sub-configurations in the N sub-configurations according to a sub-configuration index ascending order (corresponding to the mapping mode B) includes:

mapping second information corresponding to the L sub-configurations one by one according to a sub-configuration index ascending order,
wherein the second information of each sub-configuration is mapped according to the following order: wideband CQI for a second transport block (TB) corresponding to the sub-configuration, LI corresponding to the sub-configuration, a first PMI wideband information field corresponding to the sub-configuration, and a second PMI wideband information field or a codebook index corresponding to the sub-configuration.

In some embodiments, in the wideband of the CSI Part 2, mapping the second information corresponding to the last N-L sub-configurations in the N sub-configurations according to a sub-configuration index ascending order (corresponding to the mapping mode A) includes:

mapping wideband CQI for a second transport block (TB) corresponding to the last N-L sub-configurations according to a sub-configuration index ascending order;
mapping layer indicator (LI) corresponding to the last N-L sub-configurations according to a sub-configuration index ascending order;
mapping first PMI wideband information field corresponding to the last N-L sub-configurations according to a sub-configuration index ascending order;
mapping second PMI wideband information field or codebook index corresponding to the last N-L sub-configurations according to a sub-configuration index ascending order.

In some embodiments, in the wideband of the CSI Part 2, mapping the second information corresponding to the last N-L sub-configurations in the N sub-configurations according to a sub-configuration index ascending order (corresponding to the mapping mode B) includes:

mapping second information corresponding to the L sub-configurations one by one according to a sub-configuration index ascending order,
wherein the second information of each sub-configuration is mapped according to the following order: wideband CQI for a second transport block (TB) corresponding to the sub-configuration, LI corresponding to the sub-configuration, a first PMI wideband information field corresponding to the sub-configuration, and a second PMI wideband information field or a codebook index corresponding to the sub-configuration.

For example, CSI Part 2 wideband only includes wideband CQIs for the second TB, LIs and PMI of the sub-configurations 1 to N, and does not include the first information of the last N-L sub-configurations.
Table 17 shows an example of the CSI field mapping of the CSI Part2 wideband, taking "L = N, there is only the former part, this former part is all the sub-configurations, the mapping mode A is used" as an example.

Table 17

| CSI report number | CSI fields |
|---|---|
| CSI report #n<br><br>CSI 2 wideband part | Wideband CQI for the second TB of sub-configuration 1, if present and reported |
| | ...... |
| | Wideband CQI for the second TB of sub-configuration N, if present and reported |
| | LI of sub-configuration 1, if reported |
| | ...... |
| | LI of sub-configuration N, if reported |
| | PMI wideband information field $X_1$ of sub-configuration 1, if reported |
| | ...... |
| | PMI wideband information field $X_1$ of sub-configuration N, if reported |
| | PMI wideband information field $X_2$ of sub-configuration 1, or 2-port codebook index, if reported |
| | ...... |

(continued)

| CSI report number | CSI fields |
|---|---|
| | PMI wideband information field $X_2$ of sub-configuration N, or 2-port codebook index, if reported |

As shown in Table 17, wideband CQI for the second TB of sub-configuration 1 > ...... > wideband CQI for the second TB of sub-configuration N > LI of sub-configuration 1 > ...... > LI of sub-configuration N > PMI wideband information field $X_1$ of sub-configuration 1 > ...... > PMI wideband information field $X_1$ of sub-configuration N > PMI wideband information field $X_2$ of sub-configuration 1 > ...... > PMI wideband information field $X_2$ of sub-configuration N.

Table 18 shows an example of the CSI field mapping of the CSI Part2 wideband, taking "L = 1 and both the former part (L sub-configurations) and the latter part (N-L sub-configurations) use the mapping mode B, or L = N and there is only the former part, this former part is all the sub-configurations, the mapping mode B is used" as an example.

Table 18

| CSI report number | CSI fields |
|---|---|
| CSI report #n<br><br>CSI part 2 wideband | Wideband CQI for the second TB of sub-configuration 1, if present and reported |
| | LI of sub-configuration 1, if reported |
| | PMI wideband information field $X_1$ of sub-configuration 1, if reported |
| | PMI wideband information field $X_2$ of sub-configuration 1, or 2-port codebook index, if reported |
| | ....... |
| | Wideband CQI for the second TB of sub-configuration N, if present and reported |
| | LI of sub-configuration N, if reported |
| | PMI wideband information field $X_1$ of sub-configuration N, if reported |
| | PMI wideband information field $X_2$ of sub-configuration N, or 2-port codebook index, if reported |

As shown in Table 18, wideband CQI for the second TB of sub-configuration 1 > LI of sub-configuration 1 > PMI wideband information field $X_1$ of sub-configuration 1 > PMI wideband information field $X_2$ of sub-configuration 1 > ...... > wideband CQI for the second TB of sub-configuration N > LI of sub-configuration N > PMI wideband information field $X_1$ of sub-configuration N > PMI wideband information field $X_2$ of sub-configuration N.

Table 19 shows an example of the CSI field mapping of the CSI Part2 wideband, taking "L = 1 and both the former part (L sub-configurations) and the latter part (N-L sub-configurations) use the mapping mode A" as an example.

Table 19

| CSI report number | CSI fields |
|---|---|
| CSI report #n<br><br>CSI part 2 wideband | Wideband CQI for the second TB of sub-configuration 1, if present and reported |
| | LI of sub-configuration 1, if reported |
| | PMI wideband information field $X_1$ of sub-configuration 1, if reported |
| | PMI wideband information field $X_2$ of sub-configuration 1, or 2-port codebook |
| | index, if reported |
| | Wideband CQI for the second TB of sub-configuration 2, if present and reported |
| | ....... |
| | Wideband CQI for the second TB of sub-configuration N, if present and reported |
| | LI of sub-configuration 2, if reported |
| | ....... |
| | LI of sub-configuration N, if reported |

(continued)

| CSI report number | CSI fields |
|---|---|
| | PMI wideband information field $X_1$ of sub-configuration 2, if reported |
| | ....... |
| | PMI wideband information field $X_1$ of sub-configuration N, if reported |
| | PMI wideband information field $X_2$ of sub-configuration 2, or 2-port codebook index, if reported |
| | ...... |
| | PMI wideband information field $X_2$ of sub-configuration N, or 2-port codebook index, if reported |

As shown in Table 19, wideband CQI for the second TB of sub-configuration 1 > LI of sub-configuration 1 > PMI wideband information field $X_1$ of sub-configuration 1 > PMI wideband information field $X_2$ of sub-configuration 1 > wideband CQI for the second TB of sub-configuration 2 >......> wideband CQI for the second TB of sub-configuration N > LI of sub-configuration 2 >......> LI of sub-configuration N > PMI wideband information field $X_1$ of sub-configuration 2 >......> PMI wideband information field $X_1$ of sub-configuration N > PMI wideband information field $X_2$ of sub-configuration 2 > PMI wideband information field $X_2$ of sub-configuration N.

The above exemplarily shows cases in which all pieces of information are reported completely (without CSI overhead reduction), moreover, some pieces of information may be omitted.

In some embodiments, the first PMI wideband information fields corresponding to the N sub-configurations include: first PMI wideband information fields corresponding to the first M sub-configurations, first **PMI** wideband information fields corresponding to the remaining N-M sub-configurations are omitted, where $1 \leq M \leq N$; and/or

the second PMI wideband information fields or the codebook indexes corresponding to the N sub-configurations include: second PMI wideband information fields or codebook indexes corresponding to the first M sub-configurations, second PMI wideband information fields or codebook indexes corresponding to the remaining N-M sub-configurations are omitted.

In these embodiments, the PMI information corresponding to the N-M sub-configurations is the same as the PMI corresponding to one sub-configuration in the first M sub-configurations, or the network device is able to derive the PMI information corresponding to the N-M sub-configurations from the PMI corresponding to one sub-configuration in the first M sub-configurations. Therefore, it may be omitted and not reported.

Table 20 shows an example of the CSI field mapping of the CSI Part2 wideband, taking "L = N, there is only the former part, this former part is all the sub-configurations, the mapping mode A is used" as an example, in which the PMI of sub-configurations 2 to N is omitted and not reported.

Table 20

| CSI report number | CSI fields |
|---|---|
| CSI report #n<br><br>CSI part 2 wideband | Wideband CQI for the second TB of sub-configuration 1, if present and reported |
| | ...... |
| | Wideband CQI for the second TB of sub-configuration N, if present and reported |
| | LI of sub-configuration 1, if reported |
| | ...... |
| | LI of sub-configuration N, if reported |
| | PMI wideband information field $X_1$ of sub-configuration 1, if reported |
| | PMI wideband information field $X_2$ of sub-configuration 1, or 2-port codebook index, if reported |

As shown in Table 20, the PMI of sub-configurations 2 to N is omitted and not reported; the CSI field mapping order of the CSI Part2 wideband is: wideband CQI for the second TB of sub-configuration 1 > ...... > wideband CQI for the second TB of sub-configuration N > LI of sub-configuration 1 > ...... > LI of sub-configuration N > PMI wideband information field $X_1$ of sub-configuration 1 > PMI wideband information field $X_2$ of sub-configuration 1.

Table 21 shows an example of the CSI field mapping of the CSI Part2 wideband, taking "L = 1 and both the former part (L sub-configurations) and the latter part (N-L sub-configurations) use the mapping mode B, or L = N and there is only the former part, this former part is all the sub-configurations, the mapping mode B is used" as an example.

Table 21

| CSI report number | CSI fields |
|---|---|
| CSI report #n<br>CSI part 2 wideband | Wideband CQI for the second TB of sub-configuration 1, if present and reported |
| | LI of sub-configuration 1, if reported |
| | PMI wideband information field $X_1$ of sub-configuration 1, if reported |
| | PMI wideband information field $X_2$ of sub-configuration 1, or 2-port codebook index, if reported |
| | Wideband CQI for the second TB of sub-configuration 2, if present and reported |
| | LI of sub-configuration 2, if reported |
| | ....... |
| | Wideband CQI for the second TB of sub-configuration N, if present and reported |
| | LI of sub-configuration N, if reported |

As shown in Table 21, wideband CQI for the second TB of sub-configuration 1 > LI of sub-configuration 1 > PMI wideband information field $X_1$ of sub-configuration 1 > PMI wideband information field $X_2$ of sub-configuration 1 > wideband CQI for the second TB of sub-configuration 2 > LI of sub-configuration 2 >...... > wideband CQI for the second TB of sub-configuration N > LI of sub-configuration N.

Table 22 shows an example of the CSI field mapping of the CSI Part2 wideband, taking "L = 1 and both the former part (L sub-configurations) and the latter part (N-L sub-configurations) use the mapping mode A" as an example.

Table 22

| CSI report number | CSI fields |
|---|---|
| CSI report #n<br>CSI part 2 wideband | Wideband CQI for the second TB of sub-configuration 1, if present and reported |
| | LI of sub-configuration 1, if reported |
| | PMI wideband information field $X_1$ of sub-configuration 1, if reported |
| | PMI wideband information field $X_2$ of sub-configuration 1, or 2-port codebook index, if reported |
| | Wideband CQI for the second TB of sub-configuration 2, if present and reported |
| | ....... |
| | Wideband CQI for the second TB of sub-configuration N, if present and reported |
| | LI of sub-configuration 2, if reported |
| | ....... |
| | LI of sub-configuration N, if reported |

As shown in Table 22, wideband CQI for the second TB of sub-configuration 1 > LI of sub-configuration 1 > PMI wideband information field $X_1$ of sub-configuration 1 > PMI wideband information field $X_2$ of sub-configuration 1 > wideband CQI for the second TB of sub-configuration 2 > I >......> wideband CQI for the second TB of sub-configuration N > LI of sub-configuration 2 >......> LI of sub-configuration N.

In some embodiments, the CSI Part 1 only includes first information of the first L sub-configurations, and first information of the last N-L sub-configurations is included in the wideband of the CSI Part 2. In the wideband of the CSI part 2, the CSI field mapping order is: mapping the first information corresponding to the N-L sub-configurations in the N sub-configurations according to a sub-configuration index ascending order; mapping second information corresponding to the first L sub-configurations in the N sub-configurations according to a sub-configuration index ascending order; mapping the second information corresponding to the N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI Part 2, the CSI field mapping order is: mapping the second information corresponding to the first L sub-configurations in the N sub-configurations according to a sub-configuration index ascending order; mapping the first information corresponding to the N-L sub-configurations in the N sub-configurations according to a sub-configuration index ascending order; mapping the second information corresponding to the N-L sub-configurations in the N sub-configurations according to a sub-configuration index ascending order, where $1 \leq L \leq N$.

Table 23 shows another example of CSI field mapping of the CSI Part2 wideband. In the wideband of the CSI Part 2, the first information corresponding to 2 to N sub-configurations is mapped first according to a sub-configuration index ascending order; and then the second information corresponding to 1-N sub-configurations is mapped according to a sub-configuration index ascending order.

Table 23

| CSI report number | CSI fields |
|---|---|
| CSI report #n | Mapping order of the first information of sub-configurations 2 to N |
| CSI part 2 wideband | Mapping order of the second information of sub-configurations 1 to N |

As shown in Table 23, the first information of sub-configurations 2 to N is mapped according to the mapping mode A and/or mapping mode B; the mapping order of the second information of sub-configurations 1 to N may be mapped according to the three mapping modes in Tables 14, 15 and 16, and then the selected mapping modes are combined to form a final mapping order.

As shown in Table 23, CSI Part 2 wideband includes CRIs/RIs/wideband CQIs for first TB of sub-configurations 2 to N, and wideband CQIs for second TB /LIs/PMI of sub-configurations 1 to N. That is, the CSI Part 1 only includes CSI information of the sub-configuration 1, CSI information of the sub-configurations 2 to N is all placed in the wideband of the CSI Part 2.

As shown in Table 23, the CRIs and/or RIs and/or wideband CQI information for first TB of the sub-configurations 2 to N may be omitted and not reported, and wideband CQIs for the first TB of the sub-configurations 2 to N may also be differential CQIs relative to wideband CQI for the first TB of the sub-configuration 1. PMI of the sub-configurations 2 to N may be omitted and not reported.

Table 24 shows another example of CSI field mapping of the CSI Part2 wideband. In the wideband of the CSI Part 2, the second information of the sub-configuration 1 is mapped first, then the first information corresponding to 2 to N sub-configurations is mapped first according to a sub-configuration index ascending order; and then the second information corresponding to 2-N sub-configurations is mapped according to a sub-configuration index ascending order.

Table 24

| CSI report number | CSI fields |
|---|---|
| CSI report #n | Mapping order of the second information of sub-configuration 1 |
| CSI part 2 wideband | Mapping order of the first information of sub-configurations 2 to N |
| | Mapping order of the second information of sub-configurations 2 to N |

As shown in Table 24, the first information of sub-configurations 2 to N is mapped according to the mapping mode A and/or mapping mode B; the mapping order of the second information of sub-configurations 2 to N may further be mapped according to the mapping mode A and/or mapping mode B, and then the selected mapping modes are combined to form a final mapping order.

As shown in Table 24, CSI Part 2 wideband includes CRIs/RIs/wideband CQIs for first TB of sub-configurations 2 to N, and wideband CQIs for second TB /LIs/PMI of sub-configurations 1 to N. That is, the CSI Part 1 only includes CSI information of the sub-configuration 1, CSI information of the sub-configurations 2 to N is all placed in the wideband of the CSI Part 2.

As shown in Table 24, the CRIs and/or RIs and/or wideband CQI information for first TB of the sub-configurations 2 to N may be omitted and not reported, and wideband CQIs for the first TB of the sub-configurations 2 to N may also be differential CQIs relative to wideband CQI for the first TB of the sub-configuration 1. PMI of the sub-configurations 2 to N may be omitted and not reported.

Accordingly, the terminal equipment performs CSI reporting based on CSI reporting field information, a bit width and a CSI field mapping order, so that the network device is able to accurately receive and demodulate CSI Part 2 wideband information of multi-CSI.

The above exemplarily describes the CSI field mapping of the CSI Part2 wideband, however the present disclosure is not limited thereto. The following then describes the CSI field mapping of the CSI Part2 subband.

In some embodiments, in the subband of the CSI Part 2, the CSI field mapping order is:

mapping subband differential CQI for a second transport block (TB) of even subbands with ascending order, corresponding to N sub-configurations, according to a sub-configuration index ascending order;
mapping PMI subband information or codebook index of even subbands with ascending order, corresponding to the N sub-configurations, according to a sub-configuration index ascending order;
mapping subband differential CQI for a second transport block (TB) of odd subbands with ascending order, corresponding to N sub-configurations, according to a sub-configuration index ascending order;
mapping PMI subband information or codebook index of odd subbands with ascending order, corresponding to the N sub-configurations, according to a sub-configuration index ascending order.

In some embodiments, in the subband of the CSI Part 2, the CSI field mapping order is:

mapping third information corresponding to the N sub-configurations one by one according to a sub-configuration index ascending order,
wherein the third information of each sub-configuration is mapped in the following order: subband differential CQI for a second transport block (TB) of even subbands with ascending order, corresponding to the sub-configurations; PMI subband information or codebook index of even subbands with ascending order, corresponding to the sub-configurations; subband differential CQI for a second transport block (TB) of odd subbands with ascending order, corresponding to the sub-configurations; PMI subband information or a codebook index of odd subbands with ascending order, corresponding to the sub-configurations.

In some embodiments, the third information corresponding to a sub-configuration includes at least one of the following: subband differential CQI for a second transport block (TB) of even subbands with ascending order, corresponding to the sub-configurations; PMI subband information or codebook index of even subbands with ascending order, corresponding to the sub-configurations; subband differential CQI for a second transport block (TB) of odd subbands with ascending order, corresponding to the sub-configurations; or PMI subband information or a codebook index of odd subbands with ascending order, corresponding to the sub-configurations.

Table 25 shows an example of CSI field mapping of the CSI Part2 subband.

Table 25

| CSI report number | CSI fields |
|---|---|
| CSI report #n CSI part 2 subband | Subband differential CQI for the second TB of even subbands with ascending order, of sub-configuration 1, if reported |
| | ...... |
| | Subband differential CQI for second TB of even subbands with ascending order, of sub-configuration N, if reported |
| | PMI subband information $X_2$ or a 2-port codebook index of even subbands with ascending order, of sub-configuration 1, if reported |
| | ...... |
| | PMI subband information $X_2$ or a 2-port codebook index of even subbands with ascending order, of sub-configuration 1, if reported |
| | Subband differential CQI for second TB of odd subbands with ascending order, of sub-configuration 1, if reported |
| | ...... |
| | Subband differential CQI for second TB of odd subbands with ascending order, of sub-configuration N, if reported |
| | PMI subband information $X_2$ or a 2-port codebook index of odd subbands with ascending order, of sub-configuration 1, if reported |
| | ...... |
| | PMI subband information field $X_2$ or a 2-port codebook index of even subbands with ascending order, of sub-configuration N, if reported |

As shown in Table 25, the CSI field mapping order of the CSI Part2 subband is: subband differential CQI for the second TB of even subbands with ascending order, of sub-configuration 1 >......> subband differential CQI for the second TB of even subbands with ascending order, of sub-configuration N > PMI subband information $X_2$ or a 2-port codebook index of even subbands with ascending order, of sub-configuration 1 >......> PMI subband information $X_2$ or a 2-port codebook index of even subbands with ascending order, of sub-configuration N > subband differential CQI for the second TB of odd subbands with ascending order, of sub-configuration 1 >...... > subband differential CQI for the second TB of odd subbands with ascending order, of sub-configuration N > PMI subband information $X_2$ or a 2-port codebook index of odd subbands with ascending order, of sub-configuration 1 >......> PMI subband information $X_2$ or a 2-port codebook index of odd subbands with ascending order, of sub-configuration N.

Table 26 shows another example of CSI field mapping of the CSI Part2 subband.

Table 26

| CSI report number | CSI fields |
|---|---|
| CSI report #n  CSI part 2 subband | Subband differential CQI for second TB of even subbands with ascending order, of sub-configuration 1, if reported |
| | PMI subband information $X_2$ or a 2-port codebook index of even subbands with ascending order, of sub-configuration 1, if reported |
| | Subband differential CQI for second TB of odd subbands with ascending order, of sub-configuration 1, if reported |
| | PMI subband information $X_2$ or a 2-port codebook index of odd subbands with ascending order, of sub-configuration 1, if reported |
| | ...... |
| | Subband differential CQI for second TB of even subbands with ascending order, of sub-configuration N, if reported |
| | PMI subband information $X_2$ or a 2-port codebook index of even subbands with ascending order, of sub-configuration N, if reported |
| | Subband differential CQI for second TB of odd subbands with ascending order, of sub-configuration N, if reported |
| | PMI subband information field $X_2$ or a 2-port codebook index of odd subbands with ascending order, of sub-configuration N, if reported |

As shown in Table 26, the CSI field mapping order of the CSI Part2 subband is: subband differential CQI for the second TB of even subbands with ascending order, of sub-configuration 1 > PMI subband information $X_2$ or a 2-port codebook index of even subbands with ascending order, of sub-configuration 1 > subband differential CQI for the second TB of odd subbands with ascending order, of sub-configuration 1 > PMI subband information $X_2$ or a 2-port codebook index of odd subbands with ascending order, of sub-configuration 1 >...... > subband differential CQI for the second TB of even subbands with ascending order, of sub-configuration N > PMI subband information $X_2$ or a 2-port codebook index of even subbands with ascending order, of sub-configuration N > subband differential CQI for the second TB of odd subbands with ascending order, of sub-configuration N > PMI subband information $X_2$ or a 2-port codebook index of odd subbands with ascending order, of sub-configuration N.

The above exemplarily shows cases without CSI overhead reduction, moreover, some pieces of information may be omitted.

In some embodiments, the PMI subband information or a codebook index of even subbands with ascending order, corresponding to the N sub-configurations, includes: PMI subband information or a codebook index of even subbands with ascending order, corresponding to the first M sub-configurations, and PMI subband information or a codebook index of even subbands with ascending order, corresponding to the remaining N-M sub-configurations, is omitted, where $1 \leq M \leq N$; and/or

the PMI subband information or a codebook index of odd subbands with ascending order, corresponding to the N sub-configurations, includes: PMI subband information or a codebook index of odd subbands with ascending order, corresponding to the first M sub-configurations, and PMI subband information or a codebook index of odd subbands with ascending order, corresponding to the remaining N-M sub-configurations, is omitted.

For example, the PMI of sub-configurations 2 to N in the CSI part2 suband is omitted and not reported.

Table 27 shows another example of CSI field mapping of the CSI Part2 subband.

Table 27

| CSI report number | CSI fields |
|---|---|
| CSI report #n<br>CSI part 2 subband | Subband differential CQI for second TB of even subbands with ascending order, of sub-configuration 1, if reported |
| | ...... |
| | Subband differential CQI for second TB of even subbands with ascending order, of sub-configuration N, if reported |
| | PMI subband information X2 or a 2-port codebook index of even subbands with ascending order, of sub-configuration 1, if reported |
| | Subband differential CQI for second TB of odd subbands with ascending order, of sub-configuration 1, if reported |
| | ...... |
| | Subband differential CQI for second TB of odd subbands with ascending order, of sub-configuration N, if reported |
| | PMI subband information X2 or a 2-port codebook index of odd subbands with ascending order, of sub-configuration 1, if reported |

As shown in Table 27, the CSI field mapping order of the CSI Part2 subband is: subband differential CQI for the second TB of even subbands with ascending order, of sub-configuration 1 >......> subband differential CQI for the second TB of even subbands with ascending order, of sub-configuration N > PMI subband information $X_2$ or a 2-port codebook index of even subbands with ascending order, of sub-configuration 1 > subband differential CQI for the second TB of odd subbands with ascending order, of sub-configuration 1 >...... > subband differential CQI for the second TB of odd subbands with ascending order, of sub-configuration N > PMI subband information $X_2$ or a 2-port codebook index of odd subbands with ascending order, of sub-configuration 1.

Table 28 shows another example of CSI field mapping of the CSI Part2 subband.

Table 28

| CSI report number | CSI fields |
|---|---|
| CSI report #n<br><br>CSI part 2 subband | Subband differential CQI for second TB of even subbands with ascending order, of sub-configuration 1, if reported |
| | PMI subband information X2 or a 2-port codebook index of even subbands with ascending order, of sub-configuration 1, if reported |
| | Subband differential CQI for second TB of odd subbands with ascending order, of sub-configuration 1, if reported |
| | PMI subband information X2 or a 2-port codebook index of odd subbands with ascending order, of sub-configuration 1, if reported |
| | Subband differential CQI for second TB of even subbands with ascending order, of sub-configuration 2, if reported |
| | Subband differential CQI for second TB of odd subbands with ascending order, of sub-configuration 2, if reported |
| | ...... |
| | Subband differential CQI for second TB of even subbands with ascending order, of sub-configuration N, if reported |
| | Subband differential CQI for second TB of odd subbands with ascending order, of sub-configuration N, if reported |

As shown in Table 28, the CSI field mapping order of the CSI Part2 subband is: subband differential CQI for the second TB of even subbands with ascending order, of sub-configuration 1 > PMI subband information $X_2$ or a 2-port codebook index of even subbands with ascending order, of sub-configuration 1 > subband differential CQI for the second TB of odd subbands with ascending order, of sub-configuration 1 > PMI subband information $X_2$ or a 2-port codebook index of odd subbands with ascending order, of sub-configuration 1 > subband differential CQI for the second TB of even subbands with ascending order, of sub-configuration 2 > subband differential CQI for the second TB of odd subbands with ascending order, of sub-configuration 2 >......> subband differential CQI for the second TB of even subbands with ascending order, of sub-configuration N > subband differential CQI for the second TB of odd subbands with ascending order, of sub-configuration N.

The above exemplarily describes the CSI field mapping of the CSI Part2 subband, however the present disclosure is not limited thereto.

Accordingly, the terminal equipment performs CSI reporting based on CSI reporting field information, a bit width and a CSI field mapping order, so that the network device is able to accurately receive and demodulate CSI part2 subband information of multi-CSI.

The above exemplarily describes the CSI field mapping of the PUSCH-based CSI reporting, and the following further describes the CSI field mapping by taking the PUCCH-based CSI reporting as an example.

In some embodiments, in the wideband CSI, the CSI field mapping order includes: mapping first information corresponding to the first L sub-configurations in the N sub-configurations according to a sub-configuration index ascending order, where $1 \leq L \leq N$.

In some embodiments, the first information corresponding to one sub-configuration includes at least one of the following: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, wideband CQI for a first transport block (TB) corresponding to the sub-configuration, or wideband CQI for a second transport block (TB) corresponding to the sub-configuration.

For example, the first information corresponding to the first few sub-configurations may be mapped according to a sub-configuration index ascending order.

Table 29 shows an example of CSI field mapping of the wideband CSI.

Table 29

| CSI report number | CSI fields |
|---|---|
| CSI report #n | CRI of sub-configuration 1, if reported; |
| | Rank Indicator of sub-configuration 1, if reported; |
| | LI of sub-configuration 1, if reported; |
| | Zero padding bits $O_p$, if reported; |
| | PMI wideband information fields $X_1$ of sub-configuration 1, if reported; |
| | PMI wideband information fields $X_2$ of sub-configuration 1, if reported; |
| | wideband CQI for the first TB of sub-configuration 1, if reported; |
| | wideband CQI for the second TB of sub-configuration 1, if reported |

As shown in Table 29, CRI of sub-configuration 1 > RI of sub-configuration 1 > LI of sub-configuration 1 > PMI wideband information fields $X_1$ of sub-configuration 1 > PMI wideband information fields $X_2$ of sub-configuration 1 > wideband CQI for the first TB of sub-configuration 1 > wideband CQI for the second TB of sub-configuration 1. CSI Part 1 only includes CSI information of sub-configuration 1, and information of sub-configurations 2 to N is included in CSI Part2.

In some embodiments, in the wideband CSI, the CSI field mapping order includes: mapping first information corresponding to the first L sub-configurations in the N sub-configurations according to a sub-configuration index ascending order; mapping the first information corresponding to the last N-L sub-configurations in the N sub-configurations according to a sub-configuration index ascending order, where $1 \leq L \leq N$.

For example, mapping of the N sub-configurations may be divided into two front and back parts: the front part is the first L sub-configurations, and the back part is the last N-L sub-configurations, each part performs mapping using mapping mode A and mapping mode B respectively. Mapping mode A is to first sort according to information types, and then sort according to sub-configurations in each information type; mapping mode B is to first sort according to sub-configurations, and then sort according to information types in each sub-configuration.

In some embodiments, mapping the first information corresponding to the N sub-configurations according to a sub-configuration index ascending order includes:

mapping CSI-RS resource indicator (CRI) corresponding to 0 or one or more sub-configuration according to a sub-configuration index ascending order;

mapping rank indicator corresponding to 0 or one or more sub-configuration according to a sub-configuration index ascending order;

mapping layer indicator (LI) corresponding to 0 or one or more sub-configuration according to a sub-configuration index ascending order;

mapping PMI wideband information corresponding to 0 or one or more sub-configuration according to a sub-configuration index ascending order;

mapping wideband CQI for first transport block (TB) corresponding to 0 or one or more sub-configuration in the L sub-configurations according to a sub-configuration index ascending order;

mapping wideband CQI for second transport block (TB) corresponding to 0 or one or more sub-configuration in the L sub-configurations according to a sub-configuration index ascending order.

In these embodiments, for example, the CRIs of the L sub-configurations are mapped first, then the RIs of the L sub-configurations are mapped, then the LIs of the L sub-configurations are mapped, then the PMI wideband information of the L sub-configurations is mapped, then wideband CQIs for the first transport block (TB) of the L sub-configurations are mapped, and finally wideband CQIs for the second transport block (TB) of the L sub-configurations are mapped. If one or more pieces of the above information is not reported, mapping may be omitted. This mapping mode may be called mapping mode A.

In some embodiments, mapping the first information corresponding to the N sub-configurations according to a sub-configuration index ascending order includes:

mapping first information corresponding to the L sub-configurations one by one according to a sub-configuration index ascending order,

wherein the first information of each sub-configuration is mapped according to the following order: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, wideband CQI for a first transport block (TB) corresponding to the sub-configuration, and wideband CQI for a second transport block (TB) corresponding to the sub-configuration.

In these embodiments, for example, the CRI, RI, LI, PMI wideband, wideband CQI for first TB and wideband CQI for second TB of the first sub-configuration are mapped first, then the CRI, RI, LI, PMI wideband, wideband CQI for first TB and wideband CQI for second TB of the second sub-configuration are mapped, ......, then the CRI, RI, LI, PMI wideband, wideband CQI for first TB and wideband CQI for second TB of the Lth sub-configuration are mapped. If one or more pieces of the above information is not reported, mapping may be omitted. This mapping mode may be called mapping mode B.

Table 30 shows an example of the CSI field mapping of the wideband CSI, taking "L=N, there is only the former part, this former part is all the sub-configurations, the mapping mode A is used" as an example.

Table 30

| CSI report number | CSI fields |
|---|---|
| CSI report #n | CRI of sub-configuration 1, if present and reported |
| | ...... |
| | CRI of sub-configuration N, if present and reported |
| | RI of sub-configuration 1, if reported |
| | ...... |
| | RI of sub-configuration N, if reported |
| | LI of sub-configuration 1, if reported |
| | ...... |
| | LI of sub-configuration N, if reported |
| | PMI wideband information of sub-configuration 1, if reported |
| | ...... |
| | PMI wideband information of sub-configuration N, if reported |
| | Wideband CQI for the first TB of sub-configuration 1, if reported |
| | ...... |

(continued)

| CSI report number | CSI fields |
|---|---|
| | Wideband CQI for the first TB of sub-configuration N, if reported |
| | Wideband CQI for the second TB of sub-configuration 1, if reported |
| | ...... |
| | Wideband CQI for the second TB of sub-configuration N, if reported |

As shown in Table 30, CRI of sub-configuration 1 > ...... > CRI of sub-configuration N > RI of sub-configuration 1 > ...... > RI of sub-configuration N > LI of sub-configuration 1 > ...... > LI of sub-configuration N > PMI wideband information of sub-configuration 1 > ...... > PMI wideband information of sub-configuration N > Wideband CQI for the first TB of sub-configuration 1 > ...... > Wideband CQI for the first TB of sub-configuration N > Wideband CQI for the second TB of sub-configuration 1 > ...... > Wideband CQI for the second TB of sub-configuration N.

Table 31 shows an example of the CSI field mapping of the wideband CSI, taking "L = 1 and both the former part (L sub-configurations) and the latter part (N-L sub-configurations) use the mapping mode B, or L = N and there is only the former part, this former part is all the sub-configurations, the mapping mode B is used" as an example.

Table 31

| CSI report number | CSI fields |
|---|---|
| | CRI of sub-configuration 1, if present and reported |
| | RI of sub-configuration 1, if reported |
| | LI of sub-configuration 1, if reported |
| | PMI wideband information of sub-configuration 1, if reported |
| | Wideband CQI for the first TB of sub-configuration 1, if reported |
| | Wideband CQI for the second TB of sub-configuration 1, if reported |
| CSI report #n | ....... |
| | CRI of sub-configuration N, if present and reported |
| | RI of sub-configuration N, if reported |
| | LI of sub-configuration N, if reported |
| | PMI wideband information of sub-configuration N, if reported |
| | Wideband CQI for the first TB of sub-configuration N, if reported |
| | Wideband CQI for the second TB of sub-configuration N, if reported |

As shown in Table 31, CRI of sub-configuration 1 > RI of sub-configuration 1 > LI of sub-configuration 1 > PMI wideband information of sub-configuration 1 > Wideband CQI for the first TB of sub-configuration 1 > Wideband CQI for the second TB of sub-configuration 1 > ...... > CRI of sub-configuration N > RI of sub-configuration N > LI of sub-configuration N > PMI wideband information of sub-configuration N > Wideband CQI for the first TB of sub-configuration N > Wideband CQI for the second TB of sub-configuration N.

Table 32 shows an example of the CSI field mapping of the CSI Part1, taking "L = 1 and the former part (L sub-configurations) uses the mapping mode B and the latter part (N-L sub-configurations) uses the mapping mode A" as an example.

Table 32

| CSI report number | CSI fields |
|---|---|
| | CRI of sub-configuration 1, if present and reported |
| | RI of sub-configuration 1, if reported |
| | LI of sub-configuration 1, if reported |
| | PMI wideband information of sub-configuration 1, if reported |

(continued)

| CSI report number | CSI fields |
|---|---|
| CSI report #n<br><br>CSI part 1 | Wideband CQI for the first TB of sub-configuration 1, if reported |
| | Wideband CQI for the second TB of sub-configuration 1, if reported |
| | CRI of sub-configuration 2, if present and reported |
| | ....... |
| | CRI of sub-configuration N, if present and reported |
| | RI of sub-configuration 2, if reported |
| | ....... |
| | RI of sub-configuration N, if reported |
| | LI of sub-configuration 2, if reported |
| | ....... |
| | LI of sub-configuration N, if reported |
| | PMI wideband information of sub-configuration 2, if reported |
| | ....... |
| | PMI wideband information of sub-configuration N, if reported |
| | Wideband CQI for the first TB of sub-configuration 2, if reported |
| | ....... |
| | Wideband CQI for the first TB of sub-configuration N, if reported |
| | Wideband CQI for the second TB of sub-configuration 2, if reported |
| | ...... |
| | Wideband CQI for the second TB of sub-configuration N, if reported |

As shown in Table 32, CRI of sub-configuration 1 > RI of sub-configuration 1 > LI of sub-configuration 1 > PMI wideband information of sub-configuration 1 > Wideband CQI for the first TB of sub-configuration 1 > Wideband CQI for the second TB of sub-configuration 1 > CRI of sub-configuration 2 >......> CRI of sub-configuration N > RI of sub-configuration 2 >......> RI of sub-configuration N > LI of sub-configuration 2 > ...... > LI of sub-configuration N > PMI wideband information of sub-configuration 2 > ...... > PMI wideband information of sub-configuration N > Wideband CQI for the first TB of sub-configuration 2 > ...... > Wideband CQI for the first TB of sub-configuration N > Wideband CQI for the second TB of sub-configuration 2 > Wideband CQI for the second TB of sub-configuration N.

The above exemplarily shows cases in which all pieces of information are reported completely (without CSI overhead reduction), moreover, some pieces of information may be omitted.

In some embodiments, the CRI corresponding to the N sub-configurations includes: CRI corresponding to the first M sub-configurations, CRI corresponding to the remaining N-M sub-configurations is omitted, where $1 \leq M \leq N$; and/or

the rank indicator corresponding to the N sub-configurations includes: rank indicators corresponding to the first M sub-configurations, rank indicators corresponding to the remaining N-M sub-configurations are omitted, where $1 \leq M \leq N$; and/or

the LI corresponding to the N sub-configurations includes: LIs corresponding to the first M sub-configurations, LIs corresponding to the remaining N-M sub-configurations are omitted, where $1 \leq M \leq N$; and/or

the PMI wideband corresponding to the N sub-configurations includes: PMI widebands corresponding to the first M sub-configurations, PMI widebands corresponding to the remaining N-M sub-configurations are omitted, where $1 \leq M \leq N$; and/or

the coefficient information corresponding to the N sub-configurations includes: wideband CQIs for first TB corresponding to the first M sub-configurations, wideband CQIs for first TB corresponding to the remaining N-M sub-configurations are omitted, where $1 \leq M \leq N$; and/or

the coefficient information corresponding to the N sub-configurations includes: wideband CQIs for second TB corresponding to the first M sub-configurations, wideband CQIs for second TB corresponding to the remaining N-M sub-configurations are omitted, where $1 \leq M \leq N$.

For example, CRI/RI/CQI of the sub-configuration M are the same as CRI/RI/CQI of the sub-configuration 1, or the network device is able to derive the CRI/RI/CQI of the sub-configuration M based on the CRI/RI/CQI of the sub-configuration 1, and the terminal equipment only needs to report the CRI/RI/ PMI of the sub-configuration 1, the CRI/RI/CQI of the sub-configuration M may be omitted to be reported, where $1 \leq M \leq N$.

The above exemplarily describes the CSI field mapping of the PUCCH-based wideband CSI, the present disclosure is not limited thereto. For other variant examples, cases of PUSCH-based CSI field mapping may be referred to.

The above exemplarily describes the cases in which some pieces of information are omitted. The following then describes the cases in which some pieces of information are differential information.

In some embodiments, the wideband CQI corresponding to the N sub-configurations includes: wideband CQI corresponding to the first M sub-configurations, wideband CQI corresponding to the remaining N-M sub-configurations is differential CQI of wideband CQI corresponding to at least one of the first M sub-configurations.

For example, the CQI of sub-configuration 1 is reported normally, the CQIs of some or all of the sub-configurations 2 to N are differential CQIs relative to sub-configuration 1. For example, the CQI of sub-configuration 1 is reported normally, the CQIs of sub-configurations 2 to N are reported as differential CQIs. Specifically, the differential wideband CQI of sub-configuration 2 is differential CQI relative to the wideband CQI of sub-configuration 1, and sub-configurations 3 to N are processed in the same way.

The following then describes the CSI field mapping of the PUCCH-based CSI Part1.

In some embodiments, in the CSI Part 1, the CSI field mapping order is: mapping first information corresponding to the first L sub-configurations in the N sub-configurations according to a sub-configuration index ascending order; mapping the first information corresponding to the last N-L sub-configurations in the N sub-configurations according to a sub-configuration index ascending order, where $1 \leq L \leq N$.

In some embodiments, the first information of one sub-configuration includes at least one of the following: a CSI-RS resource indicator (CRI) corresponding to the sub-configuration, a rank indicator corresponding to the sub-configuration, wideband CQI for a first transport (TB) corresponding to the sub-configuration, or subband differential CQI for a first transport block (TB) corresponding to the sub-configuration.

For example, similar to the wideband CSI, the CSI Part1 may also divide mapping of the N sub-configurations into two front and back parts, each part performs mapping using mapping mode A and mapping mode B respectively. Mapping mode A is to first sort according to information types, and then sort according to sub-configurations in each information type; mapping mode B is to first sort according to sub-configurations, and then sort according to information types in each sub-configuration.

Table 33 shows an example of the CSI field mapping of the CSI Part1, taking "L = N, there is only the former part, this former part is all the sub-configurations, the mapping mode A is used" as an example.

Table 33

| CSI report number | CSI fields |
|---|---|
| CSI report #n<br><br>CSI part 1 | CRI of sub-configuration 1, if present and reported |
| | ...... |
| | CRI of sub-configuration N, if present and reported |
| | RI of sub-configuration 1, if reported |
| | ...... |
| | RI of sub-configuration N, if reported |
| | Wideband CQI for the first TB of sub-configuration 1, if reported |
| | ...... |
| | Wideband CQI for the first TB of sub-configuration N, if reported |
| | Subband differential CQI for the first TB of sub-configuration 1, if reported |
| | ...... |
| | Subband differential CQI for the first TB of sub-configuration N, if reported |

As shown in Table 33, CRI of sub-configuration 1 > ...... > CRI of sub-configuration N > RI of sub-configuration 1 > ...... > RI of sub-configuration N > Wideband CQI for the first TB of sub-configuration 1 > ...... > Wideband CQI for the first TB of sub-configuration N > Subband differential CQI for the first TB of sub-configuration 1 > ...... > Subband differential CQI for the first TB of sub-configuration N.

Table 34 shows an example of the CSI field mapping of the CSI Part1, taking "L = 1 and both the former part (L sub-configurations) and the latter part (N-L sub-configurations) use the mapping mode B, or L = N and there is only the former part, this former part is all the sub-configurations, the mapping mode B is used" as an example.

Table 34

| CSI report number | CSI fields |
|---|---|
| CSI report #n<br><br>CSI part 1 | CRI of sub-configuration 1, if present and reported |
| | RI of sub-configuration 1, if reported |
| | Wideband CQI for the first TB of sub-configuration 1, if reported |
| | Subband differential CQI for the first TB of sub-configuration 1, if reported |
| | ....... |
| | CRI of sub-configuration N, if present and reported |
| | RI of sub-configuration N, if reported |
| | Wideband CQI for the first TB of sub-configuration N, if reported |
| | Subband differential CQI for the first TB of sub-configuration N, if reported |

As shown in Table 34, CRI of sub-configuration 1 > RI of sub-configuration 1 > Wideband CQI for the first TB of sub-configuration 1 > Subband differential CQI for the first TB of sub-configuration 1 > ...... > CRI of sub-configuration N > RI of sub-configuration N > Wideband CQI for the first TB of sub-configuration N > Subband differential CQI for the first TB of sub-configuration N.

Table 35 shows an example of the CSI field mapping of the CSI Part1, taking "L = 1 and the former part (L sub-configurations) uses the mapping mode B and the latter part (N-L sub-configurations) uses the mapping mode A" as an example.

Table 35

| CSI report number | CSI fields |
|---|---|
| CSI report #n<br><br>CSI part 1 | CRI of sub-configuration 1, if present and reported |
| | RI of sub-configuration 1, if reported |
| | Wideband CQI for the first TB of sub-configuration 1, if reported |
| | Subband differential CQI for the first TB of sub-configuration 1, if reported |
| | CRI of sub-configuration 2, if present and reported |
| | ....... |
| | CRI of sub-configuration N, if present and reported |
| | RI of sub-configuration 2, if reported |
| | ....... |
| | RI of sub-configuration N, if reported |
| | Wideband CQI for the first TB of sub-configuration 2, if reported |
| | ....... |
| | Wideband CQI for the first TB of sub-configuration N, if reported |
| | Subband differential CQI for the first TB of sub-configuration 2, if reported |
| | ...... |
| | Subband differential CQI for the first TB of sub-configuration N, if reported |

As shown in Table 35, CRI of sub-configuration 1 > RI of sub-configuration 1 > Wideband CQI for the first TB of sub-configuration 1 > Subband differential CQI for the first TB of sub-configuration 1 > CRI of sub-configuration 2 > ......> CRI of sub-configuration N> RI of sub-configuration 2 >......> RI of sub-configuration N > Wideband CQI for the first TB of sub-configuration 2 >...... >Wideband CQI for the first TB of sub-configuration N > Subband differential CQI for the first TB of sub-configuration 2 > Subband differential CQI for the first TB of sub-configuration N.

The above exemplarily shows cases in which all pieces of information are reported completely (without CSI overhead reduction), moreover, some pieces of information may be omitted.

In some embodiments, the CRIs corresponding to the N sub-configurations include: CRIs corresponding to the first M sub-configurations, CRIs corresponding to the remaining N-M sub-configurations are omitted, where $1 \leq M \leq N$; and/or

the RIs corresponding to the N sub-configurations include: RIs corresponding to the first M sub-configurations, RIs corresponding to the remaining N-M sub-configurations are omitted; and/or

wideband CQIs for the first TB corresponding to the N sub-configurations include: wideband CQIs for first TB corresponding to the first M sub-configurations, wideband CQIs for first TB corresponding to the remaining N-M sub-configurations are omitted; and/or

subband differential CQIs for the first TB corresponding to the N sub-configurations include: subband differential CQIs for first TB corresponding to the first M sub-configurations, subband differential CQIs for first TB corresponding to the remaining N-M sub-configurations are omitted.

The above exemplarily describes the CSI field mapping of the PUCCH-based CSI part1, the present disclosure is not limited thereto. For other variant examples, cases of PUSCH-based CSI field mapping may be referred to.

The above exemplarily describes the cases in which some pieces of information are omitted. The following then describes the cases in which some pieces of information are differential information.

In some embodiments, the wideband CQIs corresponding to the N sub-configurations include: wideband CQIs corresponding to the first M sub-configurations, wideband CQIs corresponding to the remaining N-M sub-configurations are differential CQIs of a wideband CQI corresponding to at least one of the first M sub-configurations.

For example, the CQI of sub-configuration 1 is reported normally, the CQIs of some or all of the sub-configurations 2 to N are differential CQIs relative to sub-configuration 1. For example, the CQI of sub-configuration 1 is reported normally, the CQIs of sub-configurations 2 to N are reported as differential CQIs. Specifically, the differential wideband CQI of sub-configuration 2 is differential CQI relative to the wideband CQI of sub-configuration 1, and sub-configurations 3 to N are processed in the same way.

The following then describes the CSI field mapping of the PUCCH-based CSI Part2 wideband.

In some embodiments, in a wideband of the CSI Part 2, the CSI field mapping order is: mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI Part 2, the CSI field mapping order is: mapping the first information corresponding to the last N-L sub-configurations in the N sub-configurations according to a sub-configuration index ascending order; mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI Part 2, the CSI field mapping order is: mapping the second information corresponding to the first L sub-configurations in the N sub-configurations according to a sub-configuration index ascending order; mapping the first information corresponding to the last N-L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the second information of one sub-configuration includes at least one of the following: a wideband CQI for a second transport block (TB) corresponding to the sub-configuration, LI corresponding to the sub-configuration, a first PMI wideband information field corresponding to the sub-configuration, or a second PMI wideband information field or a codebook index corresponding to the sub-configuration.

For example, similar to the CSI Part1, CSI Part 2 wideband may also divide mapping of the N sub-configurations into two front and back parts, each part performs mapping using mapping mode A and mapping mode B respectively. Mapping mode A is to first sort according to information types, and then sort according to sub-configurations in each information type; mapping mode B is to first sort according to sub-configurations, and then sort according to information types in each sub-configuration.

The above exemplarily shows cases without CSI overhead reduction, moreover, some pieces of information may be omitted.

In some embodiments, the first PMI wideband information field corresponding to the N sub-configurations includes: first PMI wideband information fields corresponding to the first M sub-configurations, first PMI wideband information fields corresponding to the remaining N-M sub-configurations are omitted, where $1 \leq M \leq N$; and/or

the second PMI wideband information field or the codebook index corresponding to the N sub-configurations includes: second PMI wideband information fields or codebook indexes corresponding to the first M sub-configurations, second PMI wideband information fields or codebook indexes corresponding to the remaining N-M sub-configurations are omitted.

In these embodiments, the PMI information corresponding to the N-M sub-configurations is the same as the PMI corresponding to one sub-configuration in the first M sub-configurations, or the network device is able to derive the PMI information corresponding to the N-M sub-configurations from the PMI corresponding to one sub-configuration in the first M sub-configurations. Therefore, it may be omitted and not reported.

In some embodiments, the CSI Part 1 only includes first information of the first L sub-configurations, and first information of the last N-L sub-configurations is included in the wideband of the CSI Part 2. In the wideband of the CSI Part 2, the CSI field mapping order is: mapping the first information corresponding to the N-L sub-configurations in the N sub-configurations according to a sub-configuration index ascending order; mapping second information corresponding to the first L sub-configurations in the N sub-configurations according to a sub-configuration index ascending order; mapping the second information corresponding to the N-L sub-configurations in the N sub-configurations according to a sub-configuration index ascending order, where $1 \leq L \leq N$.

In some embodiments, the CSI Part 1 only includes first information of the first L sub-configurations, and first information of the last N-L sub-configurations is included in the wideband of the CSI Part 2. In the wideband of the CSI Part 2, the CSI field mapping order is: mapping the second information corresponding to the first L sub-configurations in the N sub-configurations according to a sub-configuration index ascending order; mapping the first information corresponding to the N-L sub-configurations in the N sub-configurations according to a sub-configuration index ascending order; mapping the second information corresponding to the N-L sub-configurations in the N sub-configurations according to a sub-configuration index ascending order, where $1 \leq L \leq N$.

Accordingly, the terminal equipment performs CSI reporting based on CSI reporting field information, a bit width and a CSI field mapping order, so that the network device is able to accurately receive and demodulate CSI Part 2 wideband information of multi-CSI.

The above exemplarily describes the CSI field mapping of the CSI Part2 wideband, however the present disclosure is not limited thereto. For specific examples, the aforementioned PUSCH-based field mapping may be referred to, they will not be elaborated one by one here. The following then describes the CSI field mapping of the CSI Part2 subband.

In some embodiments, in the subband of the CSI Part 2, the CSI field mapping order is:

mapping subband differential CQI for a second transport block (TB) of even subbands with ascending order, corresponding to N sub-configurations, according to a sub-configuration index ascending order;
mapping PMI subband information or a codebook index of even subbands with ascending order, corresponding to the N sub-configurations, according to a sub-configuration index ascending order;
mapping subband differential CQI for a second transport block (TB) of odd subbands with ascending order, corresponding to N sub-configurations, according to a sub-configuration index ascending order;
mapping PMI subband information or a codebook index of odd subbands with ascending order, corresponding to the N sub-configurations, according to a sub-configuration index ascending order.

In some embodiments, in the subband of the CSI Part 2, the CSI field mapping order is:

mapping third information corresponding to the N sub-configurations one by one according to a sub-configuration index ascending order,
wherein the third information of each sub-configuration is mapped in the following order: subband differential CQI for a second transport block (TB) of even subbands with ascending order, corresponding to the sub-configurations; PMI subband information or a codebook index of even subbands with ascending order, corresponding to the sub-configurations; subband differential CQI for a second transport block (TB) of odd subbands with ascending order, corresponding to the sub-configurations; PMI subband information or a codebook index of odd subbands with ascending order, corresponding to the sub-configurations.

In some embodiments, the third information corresponding to a sub-configuration includes at least one of the following: subband differential CQI for a second transport block (TB) of even subbands with ascending order, corresponding to the sub-configurations; PMI subband information or a codebook index of even subbands with ascending order, corresponding to the sub-configurations; subband differential CQI of a second transport block (TB) of odd subbands with ascending order, corresponding to the sub-configurations; or PMI subband information or a codebook index of odd subbands with ascending order, corresponding to the sub-configurations.

The above exemplarily shows cases without CSI overhead reduction, moreover, some pieces of information may be omitted.

In some embodiments, the PMI subband information or a codebook index of even subbands with ascending order, corresponding to the N sub-configurations, includes: PMI subband information or a codebook index of even subbands with ascending order, corresponding to the first M sub-configurations, and PMI subband information or a codebook index of even subbands with ascending order, corresponding to the remaining N-M sub-configurations, is omitted, where $1 \leq M \leq N$; and/or

the PMI subband information or a codebook index of odd subbands with ascending order, corresponding to the N sub-configurations, includes: PMI subband information or a codebook index of odd subbands with ascending order, corresponding to the first M sub-configurations, and PMI subband information or a codebook index of odd subbands with ascending order, corresponding to the remaining N-M sub-configurations, is omitted.

The above exemplarily describes the CSI field mapping of the CSI Part2 subband, however the present disclosure is not limited thereto. For specific examples, the aforementioned PUSCH-based field mapping may be referred to, they will not be elaborated one by one here.

Accordingly, the terminal equipment performs CSI reporting based on CSI reporting field information, a bit width and a CSI field mapping order, so that the network device is able to accurately receive and demodulate CSI part2 subband information of multi-CSI.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, even in some scenarios (such as an energy-saving mode) of wireless communication applications, a terminal equipment is still able to perform CSI mapping accurately, thereby transmitting a CSI report efficiently and accurately, CSI reporting overhead may be saved and uplink resources may be saved.

Embodiments of a second aspect

Embodiments of the present disclosure describe differential CQIs. Embodiments of the second aspect may be combined with the embodiments of the first aspect, or may be implemented separately, the same contents as the embodiments of the first aspect are omitted for description.

Network energy-saving technology supports one CSI report configuration to include L CSI sub-configurations, the one CSI sub-configuration corresponding to one piece of CSI, the one piece of CSI corresponding to one spatial domain/energy domain adjustment mode. The terminal equipment may report N pieces of CSI at one CSI report moment, and the N pieces of CSI are associated with N CSI sub-configurations in L sub-configurations.

To reduce CSI reporting overhead and computing complexity, a feasible method for compressing CSI overhead is to report CQI offsets or differential CQIs. The terminal equipment reports N pieces of CSI at one CSI reporting moment, the CSI including an RI, PMI and a CQI, etc.

By taking the CQI as an example, the terminal equipment reports S CQIs at one CSI reporting moment, i.e., a first CQI, a second CQI...an Sth CQI. The first CQI is conventional CQI reporting, and the second CQI to the Nth CQI may be differential CQIs or CQI offsets relative to the first CQI.

For example, the terminal equipment reports four CQIs, corresponding to CSI-RS 32 ports, 16 ports, 8 ports and 4 ports respectively. The first CQI corresponds to 32 ports and is a conventional CQI, i.e., using 4-bit information to represent 0 to 15 CQI indexes, the second CQI to the fourth CQI correspond to 16, 8 and 4 ports respectively, a differential CQI may be used, i.e., a differential CQI relative to the first CQI. The first CQI is a baseline CQI.

For example, the first differential CQI is defined as: offset level (s) = the Mth CQI index (s) - the first CQI index, where $1 < M < N$.

In some embodiments, the differential CQI is X bits.

By taking X = 1 as an example, a mapping table of the 1-bit first differential CQI value and an offset level may be as shown in Table 36:

Table 36

| (The mapping from the 2-bit differential CQI values to the offset level is shown) | |
|---|---|
| differential CQI value | Offset level |
| 0 | $\leq P$ (or < P or = P) |

(continued)

| (The mapping from the 2-bit differential CQI values to the offset level is shown) | |
|---|---|
| differential CQI value | Offset level |
| 1 | > P (or ≥ P) |

For another example, a mapping table of the 1-bit first differential CQI value and the offset level may be as shown in Table 37:

Table 37

| differential CQI value | Offset level |
|---|---|
| 0 | ≥ P (or > P or equal to P) |
| 1 | <P (or ≤P) |

P may be a real number such as 0, 1, 2, -1, -2, etc.

By taking X = 2 as an example, a mapping table of the 2-bit first differential CQI value and the offset level may be as shown in Table 38:

Table 38

| (The mapping from the 2-bit differential CQI values to the offset level is shown) | |
|---|---|
| differential CQI value | Offset level |
| 0 | 0 |
| 1 | 1 |
| 2 | ≥ 2 |
| 3 | ≤ -1 |

In the embodiments of the present application, the multi-CSI reporting refers to that a terminal equipment reports a CSI report at a reporting moment, the CSI report including multiple pieces of CSI; the differential CQI or CQI offset is a difference among multiple CQIs, such as differential information from the second CQI to the last CQI relative to the first CQI.

Accordingly, when the terminal equipment performs CSI reporting, CSI reporting bit overhead may be saved and CSI computing complexity may be reduced, to ensure correct reception and demodulation of CSI information, improve accuracy and completeness of measurement reporting, and guarantee data transmission performance.

Embodiments of a third aspect

Embodiments of the present disclosure describe CSI bit widths. Embodiments of the third aspect may be combined with the embodiments of the first and second aspects, or may be implemented separately, the same contents as the embodiments of the first and second aspects are omitted for description.

The terminal equipment reports a CSI report at a reporting moment, the CSI report including a first CSI, a second CSI......a Nth CSI, corresponding to sub-configuration 1, sub-configuration 2......sub-configuration N of the CSI respectively, i.e., corresponding to different spatial domain/energy domain adjustment modes. For example, N=4, the first CSI (CSI of sub-configuration 1) corresponds to a CSI-RS 32-port spatial domain adjustment mode, the second CSI (CSI of sub-configuration 2) corresponds to a 16-port spatial domain adjustment mode, the third CSI (CSI of sub-configuration 3) corresponds to an 8-port spatial domain adjustment mode, and the fourth CSI (CSI of sub-configuration 4) corresponds to a 4-port spatial domain adjustment mode. The first CSI is a baseline CSI.

The following describes bit widths of RI, LI, CQI and CRIs of sub-configuration X, where $1 \leq X \leq N$.

In some embodiments, a bit width of RI of the sub-configuration is $min(1, \lceil \log_2 n_{RI,NES} \rceil)$ in case of 2 antenna ports, $min(2, \lceil \log_2 n_{RI,NES} \rceil)$ in case of 4 antenna ports, and $\lceil \log_2 n_{RI,NES} \rceil$ in case of more than 4 antenna ports, where $n_{RI,NES}$ is the number of allowed RIs.

In some embodiments, a bit width of differential wideband CQI for the first TB of the sub-configuration is X; when the number of antenna ports is greater than 4 and a rank is 5-8, a bit width of differential wideband CQI for the second TB of the sub-configuration is X.

In some embodiments, a bit width of CRI of the sub-configuration is $\lceil \log_2 K_{NES} \rceil$ , or CRI does not need to be reported, where $K_{NES}$ is the number of CSI-RS resources in a resource set.

Table 39 is an example of bit widths in the embodiments of the present disclosure.

Table 39

| Field | Bitwidth | | | | |
|---|---|---|---|---|---|
| | 1 antenna port | 2 antenna ports | 4 antenna ports | >4 antenna ports | |
| | | | | Rank1~4 | Rank5~8 |
| RI of sub-configuration X | 0 | $\min(1, \lceil \log_2 n_{\mathrm{RI,NES}} \rceil)$ | $\min(2, \lceil \log_2 n_{\mathrm{RI,NES}} \rceil)$ | $\lceil \log_2 n_{\mathrm{RI,NES}} \rceil$ | $\lceil \log_2 n_{\mathrm{RI,NES}} \rceil$ |
| LI of sub-configuration X | 0 | $\lceil \log_2(v) \rceil$ | $\min(2, \lceil \log_2(v) \rceil)$ | $\min(2, \lceil \log_2(v) \rceil)$ | $\min(2, \lceil \log_2(v) \rceil)$ |
| Wide-band CQI for the first TB, of sub-configuration X | 4 | 4 | 4 | 4 | 4 |
| Wideband CQI for the second TB, of sub-configuration X | 0 | 0 | 0 | 0 | 4 |
| differential Wideband CQI for the first TB, of sub-configuration X | N | N | N | N | N |
| differential Wideband CQI for the second TB, of sub-configuration X | 0 | 0 | 0 | 0 | N |
| Subband differential CQI for the first TB, of sub-configuration X | 2 | 2 | 2 | 2 | 2 |
| Subband differential CQI for the second TB, of sub-configuration X | 0 | 0 | 0 | 0 | 2 |
| CRI of sub-configuration X | $\lceil \log_2 K_{NES} \rceil$ or / | $\lceil \log_2 K_{NES} \rceil$ or / | $\lceil \log_2 K_{NES} \rceil$ or / | $\lceil \log_2 K_{NES} \rceil$ or / | $\lceil \log_2 K_{NES} \rceil$ or / |

As shown in Table 39, for example, $n_{RI,NES}$ is the number of allowed RI values related to network energy saving/spatial domain energy domain element adjustment; $K_{NES}$ is the number of CSI-RS resources in a resource set related to network energy saving/spatial domain energy domain element adjustment. The bit width of the CRI of sub-configuration X is $\lceil \log_2 K_{NES} \rceil$.

/ indicates that a terminal equipment does not need to report a CRI. The terminal equipment receives a CSI-RS resource configuration. When only one resource is configured in the resource set, or multiple resources are configured in the resource set, but the network device indicates to the terminal equipment a resource index that needs to be measured and reported, etc. In these situations, the terminal equipment does not need to report the CRI.

Bit width of differential Wideband CQI for the first TB, of the sub-configuration X is X, the embodiments of the second aspect may be referred to. For example, X may be equal to 1 or 2 or 3.

Embodiments of a fourth aspect

Embodiments of the present disclosure provide a method for mapping channel state information, which is described from a network device side. Contents of the embodiments of the fourth aspect same as those in the embodiments of the first to third aspects are not elaborated here.

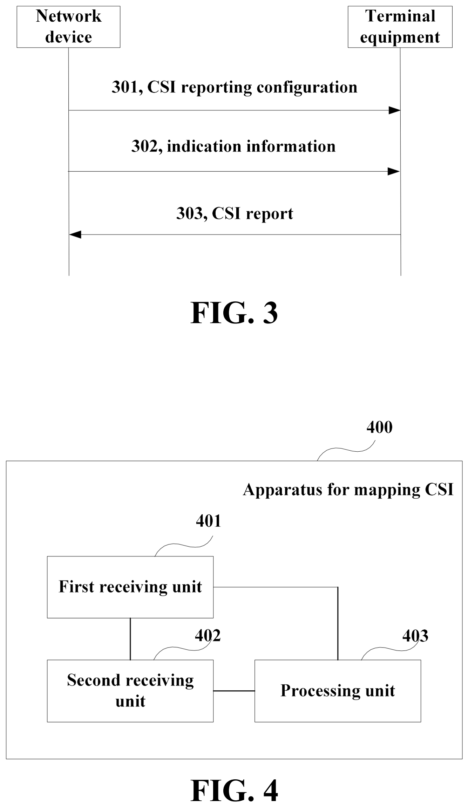

FIG. 3 is a schematic diagram of a method for mapping channel state information in the embodiments of the present disclosure, as shown in FIG. 3, the method includes:

301, a network device transmits a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$; and

302, the network device transmits indication information, the indication information being used to trigger (indicate/activate) N sub-configurations in the P sub-configurations, where $1 \leq N \leq P$; and a terminal equipment determines a CSI report at least according to a CSI field mapping order, wherein the CSI report includes at least one piece of CSI corresponding to the N sub-configurations.

It should be noted that the above FIG. 3 only schematically describes the embodiments of the present disclosure, but the present disclosure is not limited thereto. For example, an execution step of each operation may be adjusted appropriately, moreover other some operations may be added or one or more operations may be removed. Persons skilled in the art may make appropriate modifications according to the above contents, not limited to the records in the above FIG. 3.

In some embodiments, after determining the CSI field information of the CSI report, the terminal equipment performs CSI reporting at a CSI reporting moment. As shown in FIG. 3, the method may further include:

303, the network device receives a CSI report.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, even in some scenarios (such as an energy-saving mode) of wireless communication applications, a terminal equipment is still able to perform CSI mapping accurately, thereby transmitting a CSI report efficiently and accurately, CSI reporting overhead may be saved and uplink resources may be saved.

Embodiments of a fifth aspect

Embodiments of the present disclosure provide an apparatus for mapping channel state information. The apparatus may, for example, be a terminal equipment, or it may be one or more parts or components configured on the terminal equipment. The contents same as the embodiments of the first to third aspects are not repeated.

FIG. 4 is a schematic diagram of an apparatus for mapping channel state information in the embodiments of the present disclosure. As shown in FIG. 4, an apparatus 400 for mapping channel state information includes:

a first receiving unit 401, configured to receive a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;

a second receiving unit 402, configured to receive indication information, the indication information being used to trigger/indicate/activate N sub-configurations in the P sub-configurations, where $1 \leq N \leq P$; and

a processing unit 403, configured to determine a CSI report at least according to a CSI field mapping order, wherein the CSI report includes at least one piece of CSI corresponding to the N sub-configurations.

In some embodiments, the sub-configuration includes at least one of the following information: parameter N1; parameter N2; parameter Ng; a codebook subset restriction; or port information, the port information being used to indicate partial ports of channel state information reference signal (CSI-RS) resources associated with the channel state information (CSI) report configuration;

the sub-configuration is included in sub-configuration information (sub-config) of the channel state information (CSI) report configuration, or is included in codebook configuration information (codebook config) of the channel state information (CSI) report configuration, or is included in parameter configuration information (N1-N2 config) of the channel state information (CSI) report configuration.

In some embodiments, for PUSCH-based CSI reporting, the CSI report includes CSI Part 1, CSI Part 2 wideband and CSI Part 2 subband; for PUCCH-based CSI reporting, the CSI report includes wideband CSI, CSI Part 1, CSI Part 2 wideband and CSI Part 2 subband;

in the PUSCH-based CSI Part 1 or the PUCCH-based wideband CSI and/or the CSI Part 1, the CSI field mapping order includes: mapping first information corresponding to the first L sub-configurations in the N sub-configurations according to a sub-configuration index ascending order, where $1 \leq L \leq N$;

or,

in the PUSCH-based CSI Part 1 or the PUCCH-based wideband CSI and/or the CSI Part 1, the CSI field mapping order includes: mapping first information corresponding to the first L sub-configurations in the N sub-configurations according to a sub-configuration index ascending order; mapping the first information corresponding to the last N-L sub-configurations in the N sub-configurations according to a sub-configuration index ascending order, where $1 \leq L \leq N$.

In some embodiments, for CSI reporting using PUSCH, the first information corresponding to one sub-configuration includes at least one of the following: a CSI-RS resource indicator (CRI) corresponding to the sub-configuration, a rank indicator corresponding to the sub-configuration, a wideband CQI for a first transport (TB) corresponding to the sub-configuration, a subband differential CQI corresponding to the sub-configuration, or coefficient information corresponding to the sub-configuration;

or,

for CSI reporting using PUCCH, the first information corresponding to one sub-configuration includes at least one of the following: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, a wideband CQI for a first transport block (TB) corresponding to the sub-configuration, or a wideband CQI for a second transport block (TB) corresponding to the sub-configuration;

or,

for CSI reporting using PUCCH, the first information corresponding to one sub-configuration includes at least one of the following: a CSI-RS resource indicator (CRI) corresponding to the sub-configuration, a rank indicator corresponding to the sub-configuration, a wideband CQI for a first transport (TB) corresponding to the sub-configuration, or a subband differential CQI for a first transport block (TB) corresponding to the sub-configuration.

In some embodiments, for CSI reporting using PUSCH, mapping the first information corresponding to at least part of sub-configurations in the N sub-configurations according to a sub-configuration index ascending order includes:

mapping CSI-RS resource indicator (CRI) corresponding to 0 or one or more sub-configuration according to a sub-configuration index ascending order;

mapping rank indicator corresponding to 0 or one or more sub-configuration according to a sub-configuration index ascending order;

mapping wideband CQI corresponding to 0 or one or more sub-configuration according to a sub-configuration index ascending order;

mapping subband differential CQI corresponding to 0 or one or more sub-configuration according to a sub-configuration index ascending order;

mapping coefficient information corresponding to 0 or one or more sub-configuration according to a sub-configuration index ascending order.

In some embodiments, for CSI reporting using PUSCH, mapping the first information corresponding to at least part of sub-configurations in the N sub-configurations according to a sub-configuration index ascending order includes:

mapping CSI-RS resource indicator (CRI) corresponding to 0 or one or more sub-configuration according to a sub-configuration index ascending order;
mapping rank indicator corresponding to 0 or one or more sub-configuration according to a sub-configuration index ascending order;
mapping layer indicator (LI) corresponding to 0 or one or more sub-configuration according to a sub-configuration index ascending order;
mapping PMI wideband information corresponding to 0 or one or more sub-configuration according to a sub-configuration index ascending order;
mapping wideband CQI for a first transport block (TB) corresponding to 0 or one or more sub-configuration according to a sub-configuration index ascending order;
mapping wideband CQI for a second transport block (TB) corresponding to 0 or one or more sub-configuration according to a sub-configuration index ascending order.

In some embodiments, for CSI reporting using PUSCH, mapping the first information corresponding to at least part of sub-configurations in the N sub-configurations according to a sub-configuration index ascending order includes:

mapping CSI-RS resource indicator (CRI) corresponding to 0 or one or more sub-configuration according to a sub-configuration index ascending order;
mapping rank indicator corresponding to 0 or one or more sub-configuration according to a sub-configuration index ascending order;
mapping wideband CQI for a first transport block (TB) corresponding to 0 or one or more sub-configuration according to a sub-configuration index ascending order;
mapping subband differential CQI for a first transport block (TB) corresponding to 0 or one or more sub-configuration according to a sub-configuration index ascending order.

In some embodiments, for CSI reporting using PUSCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

In some embodiments, for CSI reporting using PUCCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, wideband CQI for a first transport block (TB) corresponding to the sub-configuration, and wideband CQI for a second transport block (TB) corresponding to the sub-configuration.

In some embodiments, for CSI reporting using PUCCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CSI-RS resource indicator (CRI) corresponding to the sub-configuration, a rank indicator (RI) corresponding to the sub-configuration, wideband CQI for a first transport block (TB) corresponding to the sub-configuration, and subband differential CQI for a first transport block (TB) corresponding to the sub-configuration.

In some embodiments, the CRIs corresponding to the N sub-configurations include: CRIs corresponding to the first M sub-configurations, CRIs corresponding to the remaining N-M sub-configurations are omitted, where $1 \leq M \leq N$; and/or

the rank indicators corresponding to the N sub-configurations includes: rank indicators corresponding to the first M sub-configurations, rank indicators corresponding to the remaining N-M sub-configurations are omitted, where $1 \leq M \leq N$; and/or

the wideband CQI corresponding to the N sub-configurations includes: wideband CQI corresponding to the first M sub-configurations, wideband CQI corresponding to the remaining N-M sub-configurations is omitted, where $1 \leq M \leq N$; and/or

the subband differential CQI corresponding to the N sub-configurations includes: subband differential CQI corresponding to the first M sub-configurations, subband differential CQI corresponding to the remaining N-M sub-configurations is omitted, where $1 \leq M \leq N$; and/or

the coefficient information corresponding to the N sub-configurations includes: coefficient information corresponding to the first M sub-configurations, coefficient information corresponding to the remaining N-M sub-configurations is omitted, where $1 \leq M \leq N$.

In some embodiments, the wideband CQIs corresponding to the N sub-configurations include: wideband CQIs corresponding to the first M sub-configurations, wideband CQIs corresponding to the remaining N-M sub-configurations are differential CQIs of a wideband CQI corresponding to at least one of the first M sub-configurations.

In some embodiments, for PUSCH-based CSI reporting, the CSI report includes CSI Part 1, CSI Part 2 wideband and CSI Part 2 subband; for PUCCH-based CSI reporting, the CSI report includes wideband CSI, CSI Part 1, CSI Part 2 wideband and CSI Part 2 subband;

in a wideband of the CSI Part 2, the CSI field mapping order is: mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$;

or,

in the wideband of the CSI Part 2, the CSI field mapping order is: mapping the first information corresponding to the last N-L sub-configurations in the N sub-configurations according to a sub-configuration index ascending order; mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$;

or,

in the wideband of the CSI Part 2, the CSI field mapping order is: mapping the second information corresponding to the first L sub-configurations in the N sub-configurations according to a sub-configuration index ascending order; mapping the first information corresponding to the last N-L sub-configurations in the N sub-configurations according to a sub-configuration index ascending order; mapping the second information corresponding to the last N-L sub-configurations in the N sub-configurations according to a sub-configuration index ascending order, where $1 \leq L \leq N$.

In some embodiments, the second information of one sub-configuration includes at least one of the following: a wideband CQI for a second transport block (TB) corresponding to the sub-configuration, LI corresponding to the sub-configuration, a first PMI wideband information field corresponding to the sub-configuration, or a second PMI wideband information field or a codebook index corresponding to the sub-configuration.

In some embodiments, in the wideband of the CSI Part 2, mapping the second information corresponding to at least part of sub-configurations in the N sub-configurations according to a sub-configuration index ascending order includes:

mapping wideband CQI for a second transport block (TB) corresponding to the at least part of sub-configurations according to a sub-configuration index ascending order;

mapping layer indicator (LI) corresponding to the at least part of sub-configurations according to a sub-configuration index ascending order;

mapping first PMI wideband information field corresponding to the at least part of sub-configurations according to a sub-configuration index ascending order;

mapping second PMI wideband information field or codebook index corresponding to the at least part of sub-configurations according to a sub-configuration index ascending order.

In some embodiments, in the wideband of the CSI Part 2, mapping the second information corresponding to at least part of sub-configurations in the N sub-configurations according to a sub-configuration index ascending order includes:

mapping second information corresponding to the at least part of sub-configurations one by one according to a sub-configuration index ascending order,
wherein the second information of each sub-configuration is mapped according to the following order: wideband CQI for a second transport block (TB) corresponding to the sub-configuration, LI corresponding to the sub-configuration, a first PMI wideband information field corresponding to the sub-configuration, and a second PMI wideband information field or a codebook index corresponding to the sub-configuration.

In some embodiments, the first PMI wideband information field corresponding to the N sub-configurations includes: a first PMI wideband information field corresponding to the first M sub-configurations, first PMI wideband information fields corresponding to the remaining N-M sub-configurations are omitted, where $1 \leq M \leq N$; and/or

the second PMI wideband information fields or the codebook indexes corresponding to the N sub-configurations includes: second PMI wideband information fields or codebook indexes corresponding to the first M sub-configurations, second PMI wideband information fields or codebook indexes corresponding to the remaining N-M sub-configurations are omitted.

In some embodiments, for PUSCH-based CSI reporting, the CSI report includes CSI Part 1, CSI Part 2 wideband and CSI Part 2 subband; for PUCCH-based CSI reporting, the CSI report includes wideband CSI, CSI Part 1, CSI Part 2 wideband and CSI Part 2 subband;

in the CSI part 2 subband, the CSI field mapping order is:

mapping subband differential CQI for a second transport block (TB) of even subbands with ascending order, corresponding to at least part of sub-configurations in the N sub-configurations, according to a sub-configuration index ascending order;
mapping PMI subband information or codebook index of even subbands with ascending order, corresponding to at least part of sub-configurations in the N sub-configurations, according to a sub-configuration index ascending order;
mapping subband differential CQI for a second transport block (TB) of odd subbands with ascending order, corresponding to at least part of sub-configurations in the N sub-configurations, according to a sub-configuration index ascending order;
mapping PMI subband information or codebook index of odd subbands with ascending order, corresponding to at least part of sub-configurations in the N sub-configurations, according to a sub-configuration index ascending order.

In some embodiments, in the subband of the CSI Part 2, the CSI field mapping order is:

mapping third information corresponding to the at least part of sub-configurations one by one according to a sub-configuration index ascending order,
wherein the third information of each sub-configuration is mapped in the following order: subband differential CQI for a second transport block (TB) of even subbands with ascending order, corresponding to the sub-configurations; PMI subband information or codebook index of even subbands with ascending order, corresponding to the sub-configurations; subband differential CQI for a second transport block (TB) of odd subbands with ascending order, corresponding to the sub-configurations; PMI subband information or codebook index of odd subbands with ascending order, corresponding to the sub-configurations.

In some embodiments, the third information corresponding to a sub-configuration includes at least one of the following: subband differential CQI for a second transport block (TB) of even subbands with ascending order, corresponding to the sub-configurations; PMI subband information or codebook index of even subbands with ascending order, corresponding to the sub-configurations; subband differential CQI for a second transport block (TB) of odd subbands with ascending order, corresponding to the sub-configurations; or PMI subband information or codebook index of odd subbands with ascending order, corresponding to the sub-configurations.

In some embodiments, the PMI subband information or codebook index of even subbands with ascending order, corresponding to the N sub-configurations, includes: PMI subband information or codebook index of even subbands with ascending order, corresponding to the first M sub-configurations, and PMI subband information or codebook index of even subbands with ascending order, corresponding to the remaining N-M sub-configurations, is omitted, where $1 \leq M \leq N$; and/or

the PMI subband information or codebook index of odd subbands with ascending order, corresponding to the N sub-configurations, includes: PMI subband information or codebook index of odd subbands with ascending order, corresponding to the first M sub-configurations, and PMI subband information or codebook index of odd subbands with ascending order, corresponding to the remaining N-M sub-configurations, is omitted.

In some embodiments, the CSI report includes S pieces of CQI; the second CQI to the Sth CQI are differential CQI or CQI offset relative to the first CQI;

the differential CQI being X bits.

In some embodiments, a bit width of RI of the sub-configuration is $\min(1, \lceil \log_2 n_{\text{RI,NES}} \rceil)$ in case of 2 antenna ports, $\min(2, \lceil \log_2 n_{\text{RI,NES}} \rceil)$ in case of 4 antenna ports, and $\lceil \log_2 n_{\text{RI,NES}} \rceil$ in case of more than 4 antenna ports, where $n_{\text{RI,NES}}$ is the number of allowed RIs;

a bit width of differential wideband CQI for the first TB of the sub-configuration is X; when the number of antenna ports is greater than 4 and a rank is 5-8, a bit width of differential wideband CQI for the second TB of the sub-configuration is X; and

a bit width of CRI of the sub-configuration is $\lceil \log_2 K_{NES} \rceil$, or CRI does not need to be reported, where $K_{NES}$ is the number of CSI-RS resources in a resource set.

It's worth noting that the above only describes components or modules related to the present disclosure, but the present disclosure is not limited thereto. The apparatus 400 for mapping channel state information may further include other components or modules. For detailed contents of these components or modules, relevant technologies may be referred to.

Moreover, for the sake of simplicity, FIG. 4 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the above embodiments, even in some scenarios (such as an energy-saving mode) of wireless communication applications, a terminal equipment is still able to perform CSI mapping accurately, thereby transmitting a CSI report efficiently and accurately, CSI reporting overhead may be saved and uplink resources may be saved.

Embodiments of a sixth aspect

Embodiments of the present disclosure provide an apparatus for mapping channel state information. The apparatus may be a network device, or may be one or more parts or components configured in the network device. The contents same as the embodiments of the first to fourth aspects are not repeated.

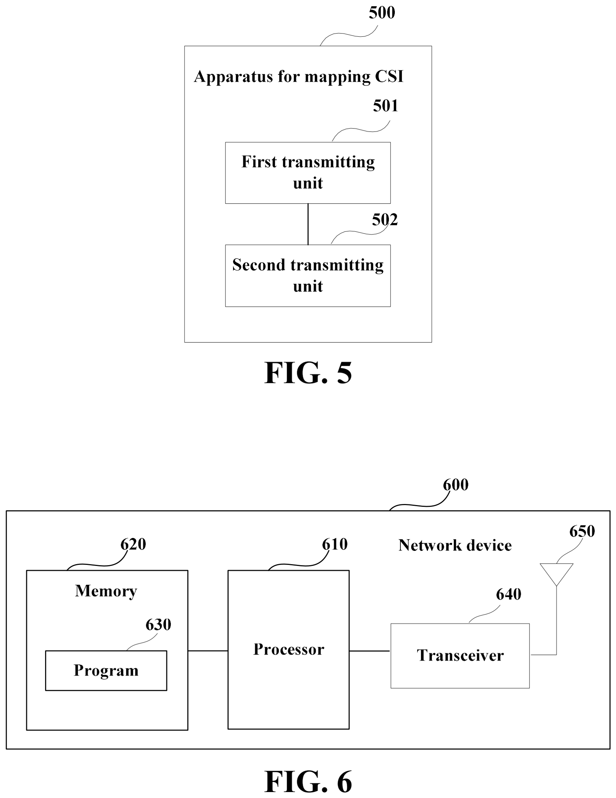

FIG. 5 is a schematic diagram of an apparatus for mapping channel state information in the embodiments of the present disclosure. As shown in FIG. 5, an apparatus 500 for mapping channel state information includes:

a first transmitting unit 501, configured to transmit a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$; and

a second transmitting unit 502, configured to transmit indication information, the indication information being used to trigger (indicate/activate) N sub-configurations in the P sub-configurations, where $1 \leq N \leq P$; and a terminal equipment determines a CSI report at least according to a CSI field mapping order, wherein the CSI report includes at least one piece of CSI corresponding to the N sub-configurations.

It's worth noting that the above only describes components or modules related to the present disclosure, but the present disclosure is not limited thereto. The apparatus 500 for mapping channel state information may further include other components or modules. For detailed contents of these components or modules, relevant technologies may be referred to.

Moreover, for the sake of simplicity, FIG. 5 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the above embodiments, even in some scenarios (such as an energy-saving mode) of wireless communication applications, a terminal equipment is still able to perform CSI mapping accurately, thereby transmitting a CSI report efficiently and accurately, CSI reporting overhead may be saved and uplink resources may be saved.

Embodiments of a seventh aspect

Embodiments of the present disclosure further provide a communication system, FIG.1 may be referred to, the contents same as the embodiments of the first to sixth aspects are not repeated.

In some embodiments, a communication system 100 at least may include:

a network device, configured to transmit a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \le P \le K$; and to transmit indication information, the indication information being used to trigger (indicate/activate) N sub-configurations in the P sub-configurations, where $1 \le N \le P$; and
a terminal equipment, configured to determine a CSI report at least according to a CSI field mapping order, wherein the CSI report includes at least one piece of CSI corresponding to the N sub-configurations.

Embodiments of the present disclosure further provide a network device, for example may be a base station, but the present disclosure is not limited to this, it may also be another network device.

FIG. 6 is a composition schematic diagram of a network device in the embodiments of the present disclosure. As shown in FIG. 6, a network device 600 may include: a processor 610 (such as a central processing unit (CPU)) and a memory 620; the memory 620 is coupled to the processor 610. The memory 620 may store various data; moreover, also stores a program 630 for information processing, and executes the program 630 under the control of the processor 610.

For example, the processor 610 may be configured to execute a program to implement the method for mapping a channel state information as described in the embodiments of the fourth aspect. For example, the processor 610 may be configured to perform the following control: transmitting a channel state information (CSI) report configuration; the channel state information (CSI) report configuration being related to K pieces of CSI, the channel state information (CSI) report configuration including P sub-configurations, one of the P sub-configurations corresponding to at least one piece of CSI, where $1 \le P \le K$; transmitting indication information, the indication information being used to trigger (indicate/activate) N sub-configurations in the P sub-configurations, $1 \le N \le P$; and determining a CSI report at least according to a CSI field mapping order, wherein the CSI report includes at least one piece of CSI corresponding to the N sub-configurations.

In addition, as shown in FIG. 6, the network device 600 may further include: a transceiver 640 and an antenna 650, etc., wherein the functions of said components are similar to relevant arts, which are not repeated here. It's worth noting that the network device 600 does not have to include all the components shown in FIG. 6. Moreover, the network device 600 may further include components not shown in FIG. 6, relevant arts may be referred to.

Embodiments of the present disclosure further provide a terminal equipment, but the present disclosure is not limited thereto, it may also be another device.

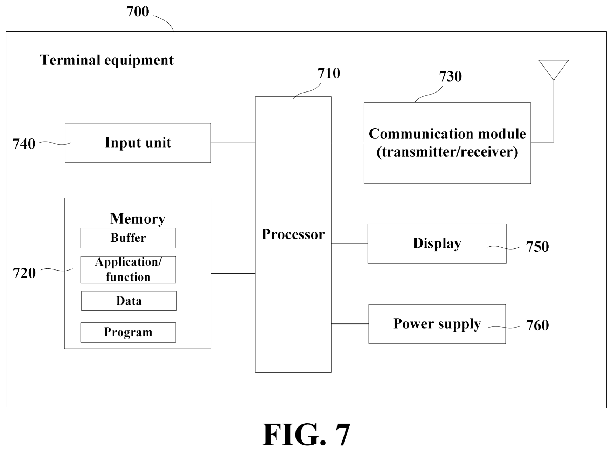

FIG. 7 is a schematic diagram of a terminal equipment in the embodiments of the present disclosure. As shown in FIG. 7, a terminal equipment 700 may include a processor 710 and a memory 720; the memory 720 stores data and programs, and is coupled to the processor 710. It's worth noting that this figure is exemplary; other types of structures may also be used to supplement or replace this structure, so as to realize a telecommunication function or other functions.

For example, the processor 710 may be configured to execute a program to implement the method for mapping a channel state information as described in the embodiments of the first to third aspects. For example, the processor 710 may be configured to perform the following control: receiving a channel state information (CSI) report configuration; the channel state information (CSI) report configuration being related to K pieces of CSI, the channel state information (CSI) report configuration including P sub-configurations, one of the P sub-configurations corresponding to at least one piece of CSI, where $1 \le P \le K$; receiving indication information, the indication information being used to trigger (indicate/activate) N sub-configurations in the P sub-configurations, $1 \le N \le P$; and determining a CSI report at least according to a CSI field mapping order, wherein the CSI report includes at least one piece of CSI corresponding to the N sub-configurations.

As shown in FIG. 7, the terminal equipment 700 may further include: a communication module 730, an input unit 740, a display 750 and a power supply 760. The functions of said components are similar to relevant arts, which are not repeated here. It's worth noting that the terminal equipment 700 does not have to include all the components shown in FIG. 7, said components are not indispensable. Moreover, the terminal equipment 700 may further include components not shown in FIG. 7, relevant arts may be referred to.

Embodiments of the present disclosure further provide a computer program, wherein when a terminal equipment executes the program, the program enables the terminal equipment to execute the method for mapping channel state information described in the embodiments of the first to third aspects.

Embodiments of the present disclosure further provide a storage medium in which a computer program is stored, wherein the computer program enables a terminal equipment to execute the method for mapping channel state information described in the embodiments of the first to third aspects.

Embodiments of the present disclosure further provide a computer program, wherein when a network device executes the program, the program enables the network device to execute the method for mapping channel state information described in the embodiments of the fourth aspect.

Embodiments of the present disclosure further provide a storage medium in which a computer program is stored, wherein the computer program enables a network device to execute the method for mapping channel state information described in the embodiments of the fourth aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram and/or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram and/or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram and/or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:

1. A method for mapping channel state information (CSI), including:

a terminal equipment receives a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;

the terminal equipment receives indication information, the indication information being used to trigger (indicate/activate) N sub-configurations in the P sub-configurations, where $1 \leq N \leq P$; and

the terminal equipment determines a CSI report at least according to a CSI field mapping order, wherein the CSI report includes at least one piece of CSI corresponding to the N sub-configurations.

2. The method according to supplement 1, wherein the sub-configuration includes at least one of the following information:

parameter N1;
parameter N2;
parameter Ng;

a codebook subset restriction; or

port information, the port information being used to indicate partial ports of channel state information reference signal (CSI-RS) resources associated with the channel state information (CSI) report configuration.

3. The method according to supplement 1, wherein the sub-configuration is included in sub-configuration information (sub-config) of the channel state information (CSI) report configuration, or is included in codebook configuration information (codebook config) of the channel state information (CSI) report configuration, or is included in parameter configuration information (N1-N2 config) of the channel state information (CSI) report configuration.

4. The method according to any one of supplements 1 to 3, wherein for PUSCH-based CSI reporting, the CSI report includes CSI Part 1, CSI Part 2 wideband and CSI Part 2 subband; for PUCCH-based CSI reporting, the CSI report includes wideband CSI, CSI Part 1, CSI Part 2 wideband and CSI Part 2 subband.

5. The method according to supplement 4, wherein in the PUSCH-based CSI Part 1 or the PUCCH-based wideband CSI and/or the CSI Part 1, the CSI field mapping order includes:

mapping first information corresponding to the first L sub-configurations in the N sub-configurations according to a sub-configuration index ascending order,
where $1 \leq L \leq N$;

6. The method according to supplement 4, wherein in the PUSCH-based CSI Part 1 or the PUCCH-based wideband CSI and/or the CSI Part 1, the CSI field mapping order includes:

mapping first information corresponding to the first L sub-configurations in the N sub-configurations according to a sub-configuration index ascending order;
mapping first information corresponding to the last N-L sub-configurations in the N sub-configurations according to a sub-configuration index ascending order,
where $1 \leq L \leq N$;

7A. The method according to supplement 5 or 6, wherein for CSI reporting using PUSCH, the first information corresponding to one sub-configuration includes at least one of the following: a CSI-RS resource indicator (CRI) corresponding to the sub-configuration, a rank indicator corresponding to the sub-configuration, a wideband CQI for a first transport (TB) corresponding to the sub-configuration, a subband differential CQI corresponding to the sub-configuration, or coefficient information corresponding to the sub-configuration.

7B. The method according to supplement 5 or 6, wherein for CSI reporting using PUCCH, the first information corresponding to one sub-configuration includes at least one of the following: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, a wideband CQI for a first transport block (TB) corresponding to the sub-configuration, or a wideband CQI for a second transport block (TB) corresponding to the sub-configuration.

7C. The method according to supplement 5 or 6, wherein for CSI reporting using PUCCH, the first information corresponding to one sub-configuration includes at least one of the following: a CSI-RS resource indicator (CRI) corresponding to the sub-configuration, a rank indicator corresponding to the sub-configuration, a wideband CQI for a first transport (TB) corresponding to the sub-configuration, or a subband differential CQI for a first transport block (TB) corresponding to the sub-configuration.

8A. The method according to any one of supplements 5 to 7, wherein for CSI reporting using PUSCH, mapping the first information corresponding to the first L sub-configurations in the N sub-configurations according to a sub-configuration index ascending order includes:

mapping CSI-RS resource indicator (CRI) corresponding to 0 or one or more sub-configuration in the L sub-configurations according to a sub-configuration index ascending order;
mapping rank indicator corresponding to 0 or one or more sub-configuration in the L sub-configurations according to a sub-configuration index ascending order;
mapping wideband CQI corresponding to 0 or one or more sub-configuration in the L sub-configurations according to a sub-configuration index ascending order;
mapping subband differential CQI corresponding to 0 or one or more sub-configuration in the L sub-configurations according to a sub-configuration index ascending order;
mapping coefficient information corresponding to 0 or one or more sub-configuration in the L sub-configurations according to a sub-configuration index ascending order.

8B. The method according to any one of supplements 5 to 7, wherein for CSI reporting using PUSCH, mapping the first information corresponding to the first L sub-configurations in the N sub-configurations according to a sub-configuration index ascending order includes:

mapping CSI-RS resource indicator (CRI) corresponding to 0 or one or more sub-configuration in the L sub-configurations according to a sub-configuration index ascending order;
mapping rank indicator corresponding to 0 or one or more sub-configuration in the L sub-configurations according to a sub-configuration index ascending order;
mapping layer indicator (LI) corresponding to 0 or one or more sub-configuration in the L sub-configurations according to a sub-configuration index ascending order;
mapping PMI wideband information corresponding to 0 or one or more sub-configuration in the L sub-configurations according to a sub-configuration index ascending order;
mapping wideband CQI for first transport block (TB) corresponding to 0 or one or more sub-configuration in the L sub-configurations according to a sub-configuration index ascending order;
mapping wideband CQI for second transport block (TB) corresponding to 0 or one or more sub-configuration in the L sub-configurations according to a sub-configuration index ascending order.

8C. The method according to any one of supplements 5 to 7, wherein for CSI reporting using PUSCH, mapping the first information corresponding to the first L sub-configurations in the N sub-configurations according to a sub-configuration index ascending order includes:

mapping CSI-RS resource indicator (CRI) corresponding to 0 or one or more sub-configuration in the L sub-configurations according to a sub-configuration index ascending order;
mapping rank indicator corresponding to 0 or one or more sub-configuration in the L sub-configurations according to a sub-configuration index ascending order;
mapping wideband CQI for first transport block (TB) corresponding to 0 or one or more sub-configuration in the L sub-configurations according to a sub-configuration index ascending order;
mapping subband differential CQI for first transport block (TB) corresponding to 0 or one or more sub-configuration in the L sub-configurations according to a sub-configuration index ascending order.

9A. The method according to any one of supplements 5 to 7, wherein for CSI reporting using PUSCH, mapping the first information corresponding to the first L sub-configurations in the N sub-configurations according to a sub-configuration index ascending order includes:

mapping first information corresponding to the L sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

9B. The method according to any one of supplements 5 to 7, wherein for CSI reporting using PUCCH, mapping the first information corresponding to the first L sub-configurations in the N sub-configurations according to a sub-configuration index ascending order includes:

mapping first information corresponding to the L sub-configurations one by one according to a sub-configuration index ascending order,
wherein the first information of each sub-configuration is mapped according to the following order: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, a wideband CQI for a first transport block (TB) corresponding to the sub-configuration, and a wideband CQI for a second transport block (TB) corresponding to the sub-configuration.

9C. The method according to any one of supplements 5 to 7, wherein for CSI reporting using PUCCH, mapping the first information corresponding to the first L sub-configurations in the N sub-configurations according to a sub-configuration index ascending order includes:

mapping first information corresponding to the L sub-configurations one by one according to a sub-configuration index ascending order,

wherein the first information of each sub-configuration is mapped according to the following order: a CSI-RS resource indicator (CRI) corresponding to the sub-configuration, a rank indicator (RI) corresponding to the sub-configuration, a wideband CQI for a first transport block (TB) corresponding to the sub-configuration, and a subband differential CQI for a first transport block (TB) corresponding to the sub-configuration.

10A. The method according to supplement 6 or 7, wherein for CSI reporting using PUSCH, mapping the first information corresponding to the last N-L sub-configurations in the N sub-configurations according to a sub-configuration index ascending order includes:

mapping CSI-RS resource indicator (CRI) corresponding to 0 or one or more sub-configuration in the N-L sub-configurations according to a sub-configuration index ascending order;
mapping rank indicator corresponding to 0 or one or more sub-configuration in the N-L sub-configurations according to a sub-configuration index ascending order;
mapping wideband CQI corresponding to 0 or one or more sub-configuration in the N-L sub-configurations according to a sub-configuration index ascending order;
mapping subband differential CQI corresponding to 0 or one or more sub-configuration in the N-L sub-configurations according to a sub-configuration index ascending order;
mapping coefficient information corresponding to 0 or one or more sub-configuration in the N-L sub-configurations according to a sub-configuration index ascending order.

10B. The method according to supplement 6 or 7, wherein for CSI reporting using PUCCH, mapping the first information corresponding to the last N-L sub-configurations in the N sub-configurations according to a sub-configuration index ascending order includes:

mapping CSI-RS resource indicator (CRI) corresponding to 0 or one or more sub-configuration in the N-L sub-configurations according to a sub-configuration index ascending order;
mapping rank indicator corresponding to 0 or one or more sub-configuration in the N-L sub-configurations according to a sub-configuration index ascending order;
mapping layer indicator (LI) corresponding to 0 or one or more sub-configuration in the N-L sub-configurations according to a sub-configuration index ascending order;
mapping PMI wideband information corresponding to 0 or one or more sub-configuration in the N-L sub-configurations according to a sub-configuration index ascending order;
mapping wideband CQI for first transport block (TB) corresponding to 0 or one or more sub-configuration in the N-L sub-configurations according to a sub-configuration index ascending order;
mapping wideband CQI for second transport block (TB) corresponding to 0 or one or more sub-configuration in the N-L sub-configurations according to a sub-configuration index ascending order.

10C. The method according to supplement 6 or 7, wherein for CSI reporting using PUCCH, mapping the first information corresponding to the last N-L sub-configurations in the N sub-configurations according to a sub-configuration index ascending order includes:

mapping CSI-RS resource indicator (CRI) corresponding to 0 or one or more sub-configuration in the N-L sub-configurations according to a sub-configuration index ascending order;
mapping rank indicator corresponding to 0 or one or more sub-configuration in the N-L sub-configurations according to a sub-configuration index ascending order;
mapping wideband CQI for first transport block (TB) corresponding to 0 or one or more sub-configuration in the N-L sub-configurations according to a sub-configuration index ascending order;
mapping subband differential CQI for first transport block (TB) corresponding to 0 or one or more sub-configuration in the N-L sub-configurations according to a sub-configuration index ascending order.

11A. The method according to supplement 6 or 7, wherein for CSI reporting using PUSCH, mapping the first information corresponding to the last N-L sub-configurations in the N sub-configurations according to a sub-configuration index ascending order includes:

mapping first information corresponding to the N-L sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

11B. The method according to supplement 6 or 7, wherein for CSI reporting using PUCCH, mapping the first information corresponding to the last N-L sub-configurations in the N sub-configurations according to a sub-configuration index ascending order includes:

mapping first information corresponding to the N-L sub-configurations one by one according to a sub-configuration index ascending order,
wherein the first information of each sub-configuration is mapped according to the following order: a CSI-RS resource indicator (CRI) corresponding to the sub-configuration, a rank indicator corresponding to the sub-configuration, a layer indicator (LI) corresponding to the sub-configuration, PMI wideband information corresponding to the sub-configuration, a wideband CQI for a first transport block (TB) corresponding to the sub-configuration, and a wideband CQI for a second transport block (TB) corresponding to the sub-configuration.

11C. The method according to supplement 6 or 7, wherein for CSI reporting using PUCCH, mapping the first information corresponding to the last N-L sub-configurations in the N sub-configurations according to a sub-configuration index ascending order includes:

mapping first information corresponding to the N-L sub-configurations one by one according to a sub-configuration index ascending order,
wherein the first information of each sub-configuration is mapped according to the following order: a CSI-RS resource indicator (CRI) corresponding to the sub-configuration, a rank indicator (RI) corresponding to the sub-configuration, a wideband CQI for a first transport block (TB) corresponding to the sub-configuration, and a subband differential CQI for a first transport block (TB) corresponding to the sub-configuration.

12A. The method according to any one of supplements 5 to 11, wherein for CSI reporting using PUSCH, the CRIs corresponding to the N sub-configurations include: CRIs corresponding to the first M sub-configurations, CRIs corresponding to the remaining N-M sub-configurations are omitted, where $1 \leq M \leq N$; and/or

the rank indicators corresponding to the N sub-configurations includes: rank indicators corresponding to the first M sub-configurations, rank indicators corresponding to the remaining N-M sub-configurations are omitted, where $1 \leq M \leq N$; and/or
the wideband CQIs corresponding to the N sub-configurations includes: wideband CQIs corresponding to the first M sub-configurations, wideband CQIs corresponding to the remaining N-M sub-configurations are omitted, where $1 \leq M \leq N$; and/or
the subband differential CQIs corresponding to the N sub-configurations includes: subband differential CQIs corresponding to the first M sub-configurations, subband differential CQIs corresponding to the remaining N-M sub-configurations are omitted, where $1 \leq M \leq N$; and/or
the coefficient information corresponding to the N sub-configurations includes: coefficient information corresponding to the first M sub-configurations, coefficient information corresponding to the remaining N-M sub-configurations is omitted, where $1 \leq M \leq N$.

12B. The method according to any one of supplements 5 to 11, wherein for CSI reporting using PUCCH, the CRIs corresponding to the N sub-configurations include: CRIs corresponding to the first M sub-configurations, CRIs corresponding to the remaining N-M sub-configurations are omitted, where $1 \leq M \leq N$; and/or

the rank indicators corresponding to the N sub-configurations includes: rank indicators corresponding to the first M sub-configurations, rank indicators corresponding to the remaining N-M sub-configurations are omitted, where $1 \leq M \leq N$; and/or
the LIs corresponding to the N sub-configurations includes: LIs corresponding to the first M sub-configurations, LIs corresponding to the remaining N-M sub-configurations are omitted, where $1 \leq M \leq N$; and/or
the PMI widebands corresponding to the N sub-configurations includes: PMI widebands corresponding to the first M sub-configurations, PMI widebands corresponding to the remaining N-M sub-configurations are omitted, where $1 \leq M \leq N$; and/or
the coefficient information corresponding to the N sub-configurations includes: wideband CQIs for first TB corresponding to the first M sub-configurations, wideband CQIs for first TB corresponding to the remaining N-M sub-configurations are omitted, where $1 \leq M \leq N$; and/or

the coefficient information corresponding to the N sub-configurations includes: wideband CQIs for second TB corresponding to the first M sub-configurations, wideband CQIs for second TB corresponding to the remaining N-M sub-configurations are omitted, where $1 \leq M \leq N$.

12C. The method according to any one of supplements 5 to 11, wherein for CSI reporting using PUCCH, the CRIs corresponding to the N sub-configurations include: CRIs corresponding to the first M sub-configurations, CRIs corresponding to the remaining N-M sub-configurations are omitted, where $1 \leq M \leq N$; and/or

the RIs corresponding to the N sub-configurations include: RIs corresponding to the first M sub-configurations, RIs corresponding to the remaining N-M sub-configurations are omitted; and/or

the first TB wideband CQIs corresponding to the N sub-configurations include: wideband CQIs for first TB corresponding to the first M sub-configurations, wideband CQIs for first TB corresponding to the remaining N-M sub-configurations are omitted; and/or

subband differential CQIs for the first TB corresponding to the N sub-configurations include: subband differential CQIs for first TB corresponding to the first M sub-configurations, subband differential CQIs for first TB corresponding to the remaining N-M sub-configurations are omitted.

13. The method according to any one of supplements 5 to 12, wherein,

the wideband CQIs corresponding to the N sub-configurations include: wideband CQIs corresponding to the first M sub-configurations, wideband CQIs corresponding to the remaining N-M sub-configurations are differential CQIs of a wideband CQI corresponding to at least one of the first M sub-configurations.

14. The method according to any one of supplements 4 to 13, wherein in the wideband of the CSI Part 2, the CSI field mapping order is:

mapping second information corresponding to the first L sub-configurations in the N sub-configurations according to a sub-configuration index ascending order;

mapping second information corresponding to the last N-L sub-configurations in the N sub-configurations according to a sub-configuration index ascending order,

where $1 \leq L \leq N$;

15. The method according to any one of supplements 4 to 13, wherein in the wideband of the CSI Part 2, the CSI field mapping order is:

mapping first information corresponding to the last N-L sub-configurations in the N sub-configurations according to a sub-configuration index ascending order;

mapping second information corresponding to the first L sub-configurations in the N sub-configurations according to a sub-configuration index ascending order;

mapping second information corresponding to the last N-L sub-configurations in the N sub-configurations according to a sub-configuration index ascending order,

where $1 \leq L \leq N$;

16. The method according to any one of supplements 4 to 13, wherein in the wideband of the CSI Part 2, the CSI field mapping order is:

mapping second information corresponding to the first L sub-configurations in the N sub-configurations according to a sub-configuration index ascending order;

mapping first information corresponding to the last N-L sub-configurations in the N sub-configurations according to a sub-configuration index ascending order;

mapping second information corresponding to the last N-L sub-configurations in the N sub-configurations according to a sub-configuration index ascending order,

where $1 \leq L \leq N$;

17. The method according to any one of supplements 14 to 16, wherein the second information of one sub-configuration includes at least one of the following: a wideband CQI for a second transport block (TB) corresponding to the sub-configuration, an LI corresponding to the sub-configuration, a first PMI wideband information field corresponding to the sub-configuration, or a second PMI wideband information field or a codebook index corresponding to the sub-configuration.

18. The method according to any one of supplements 14 to 16, wherein in the wideband of the CSI Part 2, mapping the first information corresponding to the last N-L sub-configurations in the N sub-configurations according to a sub-configuration index ascending order includes:

mapping CSI-RS resource indicator (CRI) corresponding to 0 or one or more sub-configuration in the N-L sub-configurations according to a sub-configuration index ascending order;
mapping rank indicator corresponding to 0 or one or more sub-configuration in the N-L sub-configurations according to a sub-configuration index ascending order;
mapping wideband CQI corresponding to 0 or one or more sub-configuration in the N-L sub-configurations according to a sub-configuration index ascending order;
mapping subband differential CQI corresponding to 0 or one or more sub-configuration in the N-L sub-configurations according to a sub-configuration index ascending order;
mapping coefficient information corresponding to 0 or one or more sub-configuration in the N-L sub-configurations according to a sub-configuration index ascending order.

19. The method according to any one of supplements 14 to 16, wherein in the wideband of the CSI Part 2, mapping the first information corresponding to the last N-L sub-configurations in the N sub-configurations according to a sub-configuration index ascending order includes:

mapping first information corresponding to the N-L sub-configurations one by one according to a sub-configuration index ascending order,
wherein the first information of each sub-configuration is mapped according to the following order: a CRI corresponding to the sub-configuration, a rank indicator corresponding to the sub-configuration, wideband CQI corresponding to the sub-configuration, subband differential CQI corresponding to the sub-configuration, and coefficient information corresponding to the sub-configuration.

20. The method according to any one of supplements 14 to 16, wherein in the wideband of the CSI Part 2, mapping the second information corresponding to the first L sub-configurations in the N sub-configurations according to a sub-configuration index ascending order includes:

mapping wideband CQI for second transport block (TB) corresponding to the L sub-configurations according to a sub-configuration index ascending order;
mapping layer indicator (LI) corresponding to the L sub-configurations according to a sub-configuration index ascending order;
mapping first PMI wideband information field corresponding to the L sub-configurations according to a sub-configuration index ascending order;
mapping second PMI wideband information field or codebook index corresponding to the L sub-configurations according to a sub-configuration index ascending order.

21. The method according to any one of supplements 14 to 16, wherein in the wideband of the CSI Part 2, mapping the second information corresponding to the first L sub-configurations in the N sub-configurations according to a sub-configuration index ascending order includes:

mapping second information corresponding to the L sub-configurations one by one according to a sub-configuration index ascending order,
wherein the second information of each sub-configuration is mapped according to the following order: wideband CQI for a second transport block (TB) corresponding to the sub-configuration, LI corresponding to the sub-configuration, a first PMI wideband information field corresponding to the sub-configuration, and a second PMI wideband information field or a codebook index corresponding to the sub-configuration.

22. The method according to any one of supplements 14 to 16, wherein in the wideband of the CSI Part 2, mapping the second information corresponding to the last N-L sub-configurations in the N sub-configurations according to a sub-configuration index ascending order includes:

mapping wideband CQI for second transport block (TB) corresponding to the N-L sub-configurations according to a sub-configuration index ascending order;
mapping layer indicator (LI) corresponding to the N-L sub-configurations according to a sub-configuration index ascending order;

mapping first PMI wideband information field corresponding to the N-L sub-configurations according to a sub-configuration index ascending order;
mapping second PMI wideband information field or codebook index corresponding to the N-L sub-configurations according to a sub-configuration index ascending order.

23. The method according to any one of supplements 14 to 16, wherein in the wideband of the CSI Part 2, mapping the second information corresponding to the last N-L sub-configurations in the N sub-configurations according to a sub-configuration index ascending order includes:

mapping second information corresponding to the L sub-configurations one by one according to a sub-configuration index ascending order,
wherein the second information of each sub-configuration is mapped according to the following order: wideband CQI for a second transport block (TB) corresponding to the sub-configuration, LI corresponding to the sub-configuration, a first PMI wideband information field corresponding to the sub-configuration, and a second PMI wideband information field or a codebook index corresponding to the sub-configuration.

24. The method according to any one of supplements 14 to 23, wherein the first PMI wideband information field corresponding to the N sub-configurations includes: first PMI wideband information fields corresponding to the first M sub-configurations, first PMI wideband information fields corresponding to the remaining N-M sub-configurations are omitted, where $1 \leq M \leq N$; and/or
the second PMI wideband information field or the codebook index corresponding to the N sub-configurations includes: second PMI wideband information fields or codebook indexes corresponding to the first M sub-configurations, second PMI wideband information fields or codebook indexes corresponding to the remaining N-M sub-configurations are omitted.

25. The method according to any one of supplements 2 to 24, wherein in the subband of the CSI Part 2, the CSI field mapping order is:

mapping subband differential CQI for second transport block (TB) of even subbands with ascending order, corresponding to N sub-configurations, according to a sub-configuration index ascending order;
mapping PMI subband information or codebook index of even subbands with ascending order, corresponding to the N sub-configurations, according to a sub-configuration index ascending order;
mapping subband differential CQI for second transport block (TB) of odd subbands with ascending order, corresponding to N sub-configurations, according to a sub-configuration index ascending order;
mapping PMI subband information or codebook index of odd subbands with ascending order, corresponding to the N sub-configurations, according to a sub-configuration index ascending order.

26. The method according to any one of supplements 2 to 24, wherein in the subband of the CSI Part 2, the CSI field mapping order is:

mapping third information corresponding to the N sub-configurations one by one according to a sub-configuration index ascending order,
wherein the third information of each sub-configuration is mapped in the following order: subband differential CQI for second transport block (TB) of even subbands with ascending order, corresponding to the sub-configurations; PMI subband information or codebook index of even subbands with ascending order, corresponding to the sub-configurations; subband differential CQI for second transport block (TB) of odd subbands with ascending order, corresponding to the sub-configurations; PMI subband information or codebook index of odd subbands with ascending order, corresponding to the sub-configurations.

27. The method according to supplement 26, wherein the third information corresponding to a sub-configuration includes at least one of the following: subband differential CQI for second transport block (TB) of even subbands with ascending order, corresponding to the sub-configurations; PMI subband information or codebook index of even subbands with ascending order, corresponding to the sub-configurations; subband differential CQI for second transport block (TB) of odd subbands with ascending order, corresponding to the sub-configurations; or PMI subband information or codebook index of odd subbands with ascending order, corresponding to the sub-configurations.

28. The method according to any one of supplements 25 to 27, wherein the PMI subband information or codebook index of even subbands with ascending order, corresponding to the N sub-configurations, includes: PMI subband information or codebook index of even subbands with ascending order, corresponding to the first M sub-configurations, and PMI subband information or codebook index of even subbands with ascending order, corresponding to the remaining N-M sub-configurations, is omitted, where $1 \leq M \leq N$; and/or

the PMI subband information or codebook index of odd subbands with ascending order, corresponding to the N sub-configurations, includes: PMI subband information or codebook index of odd subbands with ascending order, corresponding to the first M sub-configurations, and PMI subband information or codebook index of odd subbands with ascending order, corresponding to the remaining N-M sub-configurations, is omitted.

29. The method according to any one of supplements 1 to 28, wherein the CSI report includes S pieces of CQI; the second CQI to the Sth CQI are differential CQIs or CQI offsets relative to the first CQI.

30. The method according to supplement 29, wherein the differential CQIs are X bits.

31. The method according to any one of supplements 1 to 30, wherein,

a bit width of RI of the sub-configuration is $\min(1, \lceil \log_2 n_{\mathrm{RI,NES}} \rceil)$ in case of 2 antenna ports, $\min(2, \lceil \log_2 n_{\mathrm{RI,NES}} \rceil)$ in case of 4 antenna ports, and $\lceil \log_2 n_{\mathrm{RI,NES}} \rceil$ in case of more than 4 antenna ports, where $n_{\mathrm{RI,NES}}$ is the number of allowed RIs.

32. The method according to any one of supplements 1 to 31, wherein,

a bit width of differential wideband CQI for the first TB of the sub-configuration is X;
when the number of antenna ports is greater than 4 and a rank is 5-8, a bit width of differential wideband CQI for the second TB of the sub-configuration is X.

33. The method according to any one of supplements 1 to 32, wherein,

a bit width of CRI of the sub-configuration is $\lceil \log_2 K_{NES} \rceil$, or CRI does not need to be reported, where $K_{NES}$ is the number of CSI-RS resources in a resource set.

34. A method for mapping a channel state information (CSI) report, including:

a network device transmits a channel state information (CSI) report configuration, the channel state information (CSI) report configuration being related to K pieces of CSI, the channel state information (CSI) report configuration including P sub-configurations, one of the P sub-configurations corresponding to at least one piece of CSI, where $1 \leq P \leq K$;

the network device transmits indication information, the indication information being used to trigger (indicate/activate) N sub-configurations in the P sub-configurations, where $1 \leq N \leq P$; and a terminal equipment determines a CSI report at least according to a CSI field mapping order, wherein the CSI report includes at least one piece of CSI corresponding to the N sub-configurations.

35. A terminal equipment, including a memory and a processor, the memory storing a computer program, and the processor being configured to execute the computer program to implement the method for mapping channel state information according to any one of supplements 1 to 33.

36. A network device, including a memory and a processor, the memory storing a computer program, and the processor being configured to execute the method for mapping channel state information according to supplement 34.

**Claims**

1. An apparatus for mapping channel state information, the apparatus comprising:

a first receiving unit, configured to receive a channel state information report configuration, the channel state information report configuration being related to K pieces of channel state information, the channel state information report configuration comprising P sub-configurations, one of the P sub-configurations corresponding to at least one piece of channel state information, where P is greater than or equal to 1 and less than or equal to K;

a second receiving unit, configured to receive indication information, the indication information being used to trigger/indicate/activate N sub-configurations of the P sub-configurations, where N is greater than or equal to 1 and less than or equal to P; and

a processing unit, configured to determine a channel state information report at least according to a channel state information field mapping order, wherein the channel state information report comprises at least one piece of channel state information corresponding to the N sub-configurations.

2. The apparatus according to claim 1, wherein the sub-configuration comprises at least one of the following information: parameter N1; parameter N2; parameter Ng; codebook subset restriction; or port information, wherein the port information is used to indicate partial ports of channel state information reference signal resources associated with the channel state information report configuration; and

the sub-configuration is included in sub-configuration information of the channel state information report configuration, or is included in codebook configuration information of the channel state information report configuration, or is included in parameter configuration information of the channel state information report configuration.

3. The apparatus according to claim 1, wherein for PUSCH-based channel state information reporting, the channel state information report comprises CSI Part 1, CSI Part 2 wideband and CSI Part 2 subband; for PUCCH-based channel state information reporting, the channel state information report comprises wideband CSI, CSI Part 1, CSI Part 2 wideband and CSI Part 2 subband;

in the PUSCH-based CSI Part 1 or the PUCCH-based wideband CSI and/or the CSI Part 1, the CSI field mapping order includes: mapping first information corresponding to the first L sub-configurations in the N sub-configurations according to a sub-configuration index ascending order, where L is greater than or equal to 1 and less than or equal to N;
or,
in the PUSCH-based CSI Part 1 or the PUCCH-based wideband CSI and/or the CSI Part 1, the CSI field mapping order includes: mapping first information corresponding to the first L sub-configurations in the N sub-configurations according to a sub-configuration index ascending order; mapping the first information corresponding to the last N-L sub-configurations in the N sub-configurations according to a sub-configuration index ascending order, where L is greater than or equal to 1 and less than or equal to N.

4. The apparatus according to claim 3, wherein,

for CSI reporting using PUSCH, the first information corresponding to one sub-configuration includes at least one of the following: a CSI-RS resource indicator corresponding to the sub-configuration, a rank indicator corresponding to the sub-configuration, a wideband CQI for a first transport block corresponding to the sub-configuration, a subband differential CQI corresponding to the sub-configuration, or coefficient information corresponding to the sub-configuration;
or,
for CSI reporting using PUCCH, the first information corresponding to one sub-configuration includes at least one of the following: a CSI-RS resource indicator corresponding to the sub-configuration, a rank indicator corresponding to the sub-configuration, a layer indicator corresponding to the sub-configuration, PMI wideband information corresponding to the sub-configuration, a wideband CQI for a first transport block corresponding to the sub-configuration, or a wideband CQI for a second transport block corresponding to the sub-configuration;
or,
for CSI reporting using PUCCH, the first information corresponding to one sub-configuration includes at least one of the following: a CSI-RS resource indicator corresponding to the sub-configuration, a rank indicator corresponding to the sub-configuration, a wideband CQI for a first transport block corresponding to the sub-configuration, or a subband differential CQI for a first transport block corresponding to the sub-configuration.

5. The apparatus according to claim 3, wherein,
for CSI reporting using PUSCH, mapping the first information corresponding to at least part of sub-configurations in the N sub-configurations according to a sub-configuration index ascending order includes:

mapping CSI-RS resource indicator(s) corresponding to 0 or one or more sub-configuration according to a sub-configuration index ascending order;
mapping rank indicator(s) corresponding to 0 or one or more sub-configuration according to a sub-configuration index ascending order;
mapping wideband CQI(s) corresponding to 0 or one or more sub-configuration according to a sub-configuration index ascending order;
mapping subband differential CQI(s) corresponding to 0 or one or more sub-configuration according to a sub-configuration index ascending order;
mapping coefficient information corresponding to 0 or one or more sub-configuration according to a sub-configuration index ascending order;
or,

for CSI reporting using PUSCH, mapping the first information corresponding to at least part of sub-configurations in the N sub-configurations according to a sub-configuration index ascending order includes:

mapping CSI-RS resource indicator(s) corresponding to 0 or one or more sub-configuration according to a sub-configuration index ascending order;
mapping rank indicator(s) corresponding to 0 or one or more sub-configuration according to a sub-configuration index ascending order;
mapping layer indicator(s) corresponding to 0 or one or more sub-configuration according to a sub-configuration index ascending order;
mapping PMI wideband information corresponding to 0 or one or more sub-configuration according to a sub-configuration index ascending order;
mapping wideband CQI(s) for first transport block corresponding to 0 or one or more sub-configuration according to a sub-configuration index ascending order;
mapping wideband CQI(s) for second transport block corresponding to 0 or one or more sub-configuration according to a sub-configuration index ascending order;
or,
for CSI reporting using PUSCH, mapping the first information corresponding to at least part of sub-configurations in the N sub-configurations according to a sub-configuration index ascending order includes:

mapping CSI-RS resource indicator(s) corresponding to 0 or one or more sub-configuration according to a sub-configuration index ascending order;
mapping rank indicator(s) corresponding to 0 or one or more sub-configuration according to a sub-configuration index ascending order;
mapping wideband CQI(s) for first transport block corresponding to 0 or one or more sub-configuration according to a sub-configuration index ascending order;
mapping subband differential CQI(s) for first transport block corresponding to 0 or one or more sub-configuration according to a sub-configuration index ascending order.

6. The apparatus according to claim 3, wherein,
for CSI reporting using PUSCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CSI-RS resource indicator corresponding to the sub-configuration, a rank indicator corresponding to the sub-configuration, a wideband CQI corresponding to the sub-configuration, a subband differential CQI corresponding to the sub-configuration, and coefficient information corresponding to the sub-configuration;
or,
for CSI reporting using PUCCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CSI-RS resource indicator corresponding to the sub-configuration, a rank indicator corresponding to the sub-configuration, a layer indicator corresponding to the sub-configuration, PMI wideband information corresponding to the sub-configuration, a wideband CQI for a first transport block corresponding to the sub-configuration, and a wideband CQI for a second transport block corresponding to the sub-configuration;
or,
for CSI reporting using PUCCH, mapping the first information corresponding to at least part of sub-configurations in the N sub-configurations according to a sub-configuration index ascending order includes:

mapping first information corresponding to the at least part of sub-configurations one by one according to a sub-configuration index ascending order,
wherein the first information of each sub-configuration is mapped according to the following order: a CSI-RS resource indicator corresponding to the sub-configuration, a rank indicator corresponding to the sub-configuration, a wideband CQI for a first transport block corresponding to the sub-configuration, and a subband differential CQI for a first transport block corresponding to the sub-configuration.

7. The apparatus according to claim 3, wherein CRI(s) corresponding to the N sub-configurations comprises: CRI(s) corresponding to the first M sub-configurations, and CRI(s) corresponding to the remaining N-M sub-configurations is omitted, where M is greater than or equal to 1 and less than or equal to N; and/or

rank indicator(s) corresponding to the N sub-configurations comprises: rank indicator(s) corresponding to the first M sub-configurations, and rank indicator(s) corresponding to the remaining N-M sub-configurations is omitted; and/or
wideband CQI(s) corresponding to the N sub-configurations comprises: wideband CQI(s) corresponding to the first M sub-configurations, and wideband CQI(s) corresponding to the remaining N-M sub-configurations is omitted; and/or
subband differential CQI(s) corresponding to the N sub-configurations comprises: subband differential CQI(s) corresponding to the first M sub-configurations, and subband differential CQI(s) corresponding to the remaining N-M sub-configurations is omitted; and/or
coefficient information corresponding to the N sub-configurations comprises: coefficient information corresponding to the first M sub-configurations, coefficient information corresponding to the remaining N-M sub-configurations is omitted.

8. The apparatus according to claim 3, wherein,
wideband CQI(s) corresponding to the N sub-configurations comprises: wideband CQI(s) corresponding to the first M sub-configurations, and wideband CQI(s) corresponding to the remaining N-M sub-configurations is differential CQI(s) of wideband CQI corresponding to at least one of the first M sub-configurations.

9. The apparatus according to claim 1, wherein for PUSCH-based CSI reporting, the CSI report comprises CSI Part 1, CSI Part 2 wideband and CSI Part 2 subband; for PUCCH-based CSI reporting, the CSI report comprises wideband CSI, CSI Part 1, CSI Part 2 wideband and CSI Part 2 subband;

in the CSI Part 2 wideband, the CSI field mapping order is: mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where L is greater than or equal to 1 and less than or equal to N;
or,
in the CSI Part 2 wideband, the CSI field mapping order is: mapping the first information corresponding to the last N-L sub-configurations in the N sub-configurations according to a sub-configuration index ascending order; mapping second information corresponding to the first L sub-configurations in the N sub-configurations according to a sub-configuration index ascending order; mapping the second information corresponding to the last N-L sub-configurations in the N sub-configurations according to a sub-configuration index ascending order, where L is greater than or equal to 1 and less than or equal to N;
or,
in the CSI Part 2 wideband, the CSI field mapping order is: mapping the second information corresponding to the first L sub-configurations in the N sub-configurations according to a sub-configuration index ascending order; mapping the first information corresponding to the last N-L sub-configurations in the N sub-configurations according to a sub-configuration index ascending order; mapping the second information corresponding to the last N-L sub-configurations in the N sub-configurations according to a sub-configuration index ascending order, where L is greater than or equal to 1 and less than or equal to N.

10. The apparatus according to claim 9, wherein the second information of one sub-configuration comprises at least one of the following: a wideband CQI for a second transport block corresponding to the sub-configuration, a LI corresponding to the sub-configuration, a first PMI wideband information field corresponding to the sub-configuration, or a second PMI wideband information field or a codebook index corresponding to the sub-configuration.

11. The apparatus according to claim 9, wherein in the CSI Part 2 wideband, mapping the second information corresponding to at least part of sub-configurations in the N sub-configurations according to a sub-configuration index ascending order includes:

mapping wideband CQI(s) for second transport block corresponding to the at least part of sub-configurations according to a sub-configuration index ascending order;

mapping layer indicator(s) corresponding to the at least part of sub-configurations according to a sub-configuration index ascending order;

mapping first PMI wideband information field(s) corresponding to the at least part of sub-configurations according to a sub-configuration index ascending order;

mapping second PMI wideband information field(s) or codebook index(es) corresponding to the at least part of sub-configurations according to a sub-configuration index ascending order.

12. The apparatus according to claim 9, wherein in the CSI Part 2 wideband, mapping the second information corresponding to at least part of sub-configurations in the N sub-configurations according to a sub-configuration index ascending order includes:

mapping second information corresponding to the at least part of sub-configurations one by one according to a sub-configuration index ascending order,

wherein the second information of each sub-configuration is mapped according to the following order: a wideband CQI for a second transport block corresponding to the sub-configuration, a LI corresponding to the sub-configuration, a first PMI wideband information field corresponding to the sub-configuration a second PMI wideband information field or a codebook index corresponding to the sub-configuration.

13. The apparatus according to claim 9, wherein first PMI wideband information field(s) corresponding to the N sub-configurations comprises: first PMI wideband information field(s) corresponding to the first M sub-configurations, and first PMI wideband information field(s) corresponding to the remaining N-M sub-configurations is omitted, where M is greater than or equal to 1 and less than or equal to N; and/or

second PMI wideband information field(s) or codebook index(es) corresponding to the N sub-configurations comprises: second PMI wideband information field(s) or codebook index(es) corresponding to the first M sub-configurations, and second PMI wideband information field(s) or codebook index(es) corresponding to the remaining N-M sub-configurations is omitted.

14. The apparatus according to claim 1, wherein for PUSCH-based CSI reporting, the CSI report comprises CSI Part 1, CSI Part 2 wideband and CSI Part 2 subband; for PUCCH-based CSI reporting, the CSI report comprises wideband CSI, CSI Part 1, CSI Part 2 wideband and CSI Part 2 subband;

in the CSI Part 2 subband, the CSI field mapping order is:

mapping subband differential CQI(s) for a second transport block of even subbands with ascending order, corresponding to at least part of sub-configurations in the N sub-configurations, according to a sub-configuration index ascending order;

mapping PMI subband information or codebook index(s) of even subbands with ascending order, corresponding to at least part of sub-configurations in the N sub-configurations, according to a sub-configuration index ascending order;

mapping subband differential CQI(s) for a second transport block of odd subbands with ascending order, corresponding to at least part of sub-configurations in the N sub-configurations, according to a sub-configuration index ascending order;

mapping PMI subband information or codebook index(s) of odd subbands with ascending order, corresponding to at least part of sub-configurations in the N sub-configurations, according to a sub-configuration index ascending order;

or,

in the CSI Part 2 subband, the CSI field mapping order is:

mapping third information corresponding to the at least part of sub-configurations one by one according to a sub-configuration index ascending order,

wherein the third information of each sub-configuration is mapped in the following order: subband differential CQI(s) for a second transport block of even subbands with ascending order, corresponding to the sub-configuration; PMI subband information or codebook index(s) of even subbands with ascending order, corresponding to the sub-configuration; subband differential CQI(s) for a second transport block of odd subbands with ascending order, corresponding to the sub-configuration; PMI subband information or codebook index(s) of odd subbands with ascending order, corresponding to the sub-configuration.

15. The apparatus according to claim 14, wherein the third information corresponding to a sub-configuration comprises at least one of the following: subband differential CQI(s) for a second transport block of even subbands with ascending order, corresponding to the sub-configuration; PMI subband information or codebook index(s) of even subbands with ascending order, corresponding to the sub-configuration; subband differential CQI(s) for a second transport block of odd subbands with ascending order, corresponding to the sub-configuration; or PMI subband information or codebook index(s) of odd subbands with ascending order, corresponding to the sub-configuration.

16. The apparatus according to claim 14, wherein the PMI subband information or codebook index(s) of even subbands with ascending order, corresponding to the N sub-configurations, comprises: PMI subband information or codebook index(s) of even subbands with ascending order, corresponding to the first M sub-configurations, and PMI subband information or codebook index(s) of even subbands with ascending order, corresponding to the remaining N-M sub-configurations, is omitted, where M is greater than or equal to 1 and less than or equal to N; and/or
the PMI subband information or codebook index(s) of odd subbands with ascending order, corresponding to the N sub-configurations, comprises: PMI subband information or codebook index(s) of odd subbands with ascending order, corresponding to the first M sub-configurations, and PMI subband information or codebook index(s) of odd subbands with ascending order, corresponding to the remaining N-M sub-configurations, is omitted.

17. The apparatus according to claim 1, wherein the channel state information report comprises S CQIs; a second CQI to a Sth CQI are differential CQI or CQI offset relative to a first CQI;
the differential CQI being X bits.

18. The apparatus according to claim 1, wherein,

a bit width of RI of the sub-configuration is $\min(1, \lceil \log_2 n_{\mathrm{RI,NES}} \rceil)$ in case of 2 antenna ports, $\min(2, \lceil \log_2 n_{\mathrm{RI,NES}} \rceil)$ in case of 4 antenna ports, and $\lceil \log_2 n_{\mathrm{RI,NES}} \rceil$ in case of more than 4 antenna ports, where $n_{\mathrm{RI,NES}}$ is the number of allowed RIs;
a bit width of differential wideband CQI for first TB of the sub-configuration is X; when the number of antenna ports is greater than 4 and a rank is 5-8, a bit width of differential wideband CQI for second TB of the sub-configuration is X; and

a bit width of CRI of the sub-configuration is $\lceil \log_2 K_{NES} \rceil$, or CRI does not need to be reported, where $K_{NES}$ is the number of CSI-RS resources in a resource set.

19. An apparatus for mapping channel state information, the apparatus comprising:

a first transmitting unit, configured to transmit a channel state information report configuration, the channel state information report configuration being related to K pieces of channel state information, the channel state information report configuration comprising P sub-configurations, one of the P sub-configurations corresponding to at least one piece of channel state information, where P is greater than or equal to 1 and less than or equal to K;
a second transmitting unit, configured to transmit indication information, the indication information being used to trigger/indicate/activate N sub-configurations of the P sub-configurations, where N is greater than or equal to 1 and less than or equal to P; and a terminal equipment being configured to determine a channel state information report at least according to a channel state information field mapping order, wherein the channel state information report comprises at least one piece of channel state information corresponding to the N sub-configurations.

20. A communication system, comprising:

a network device, configured to transmit a channel state information report configuration, the channel state information report configuration being related to K pieces of channel state information, the channel state information report configuration comprising P sub-configurations, one of the P sub-configurations corresponding to at least one piece of channel state information, where P is greater than or equal to 1 and less than or equal to K; and to transmit indication information, the indication information being used to trigger/indicate/activate N sub-configurations of the P sub-configurations, where N is greater than or equal to 1 and less than or equal to P; and a terminal equipment, configured to determine a channel state information report at least according to a channel state information field mapping order, wherein the channel state information report comprises at least one piece of channel state information corresponding to the N sub-configurations.

**FIG. 1**

201

a terminal equipment receives a CSI reporting configuration, the CSI reporting configuration being related to K pieces of CSI, the CSI reporting configuration comprising P sub-configurations, one of the P sub-configurations corresponding to at least one piece of CSI

202

the terminal equipment receives indication information, the indication information being used to trigger/indicate/activate N sub-configurations in the P sub-configurations

203

the terminal equipment determines a CSI report at least according to a CSI field mapping order, wherein the CSI report comprises at least one piece of CSI corresponding to the N sub-configurations

**FIG. 2**

**FIG. 3**

**FIG. 4**

500

**Apparatus for mapping CSI**

501

| First transmitting unit |

502

| Second transmitting unit |

## FIG. 5

600

Network device

650

620

**Memory**

630

| Program |

610

| Processor |

640

| Transceiver |

## FIG. 6

**FIG. 7**

## INTERNATIONAL SEARCH REPORT

| International application No. |
| --- |
| **PCT/CN2023/094270** |

**A. CLASSIFICATION OF SUBJECT MATTER**

H04L1/00(2006.01)i; H04B 7/0413(2017.01)i; H04W24/10(2009.01)i

According to International Patent Classification (IPC) or to both national classification and IPC

**B. FIELDS SEARCHED**

Minimum documentation searched (classification system followed by classification symbols)

IPC:H04L,H04B,H04W

Documentation searched other than minimum documentation to the extent that such documents are included in the fields searched

Electronic data base consulted during the international search (name of data base and, where practicable, search terms used)

CNTXT, ENTXT, ENTXTC, VEN, VCN, DWPI, 3GPP: 信道状态信息, CSI-RS资源指示, 秩指示, 信道质量指示, 上报, 报告, 配置, 指示, 激活, 触发, 子, 映射, 码本, 端口, Channel State Information, CSI, CSI-RS Resource Indication, CRI, Rank Indication, RI, Channel Quality Indication, CQI, Report, Configure, Indicate, Activate, Trigger, Sub, Mapping, Codebook, Port

**C. DOCUMENTS CONSIDERED TO BE RELEVANT**

| Category* | Citation of document, with indication, where appropriate, of the relevant passages | Relevant to claim No. |
| --- | --- | --- |
| A | CN 111247829 A (MEDIATEK INC.) 05 June 2020 (2020-06-05)<br>claims 1 and 4, and description, paragraphs 54-76 | 1-20 |
| A | CN 109803289 A (HUAWEI TECHNOLOGIES CO., LTD.) 24 May 2019 (2019-05-24)<br>entire document | 1-20 |
| A | CN 115603838 A (VIVO COMMUNICATION TECHNOLOGY CO., LTD.) 13 January 2023 (2023-01-13)<br>entire document | 1-20 |
| A | CN 109757127 A (LG ELECTRONICS INC.) 14 May 2019 (2019-05-14)<br>entire document | 1-20 |
| A | ERICSSON. "Summary of views on CSI reporting v1"<br>*3GPP TSG-RAN WG1 Meeting #94bis, R1-1811642*, 12 October 2018 (2018-10-12),<br>entire document | 1-20 |
| A | US 2022239356 A1 (SAMSUNG ELECTRONICS CO., LTD.) 28 July 2022 (2022-07-28)<br>entire document | 1-20 |

☐ Further documents are listed in the continuation of Box C.  ☑ See patent family annex.

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **08 December 2023** | **14 December 2023** |

| Name and mailing address of the ISA/CN<br>**China National Intellectual Property Administration (ISA/CN)**<br>**China No. 6, Xitucheng Road, Jimenqiao, Haidian District, Beijing 100088** | Authorized officer |
| --- | --- |
| | Telephone No. |

Form PCT/ISA/210 (second sheet) (July 2022)

**INTERNATIONAL SEARCH REPORT**
Information on patent family members

International application No.

**PCT/CN2023/094270**

| Patent document cited in search report | | | Publication date (day/month/year) | Patent family member(s) | | | Publication date (day/month/year) |
|---|---|---|---|---|---|---|---|
| CN | 111247829 | A | 05 June 2020 | TW | 202101930 | A | 01 January 2021 |
| | | | | WO | 2019242737 | A1 | 26 December 2019 |
| | | | | US | 2019393979 | A1 | 26 December 2019 |
| | | | | EP | 3808123 | A1 | 21 April 2021 |
| | | | | IN | 202127002671 | A | 19 February 2021 |
| CN | 109803289 | A | 24 May 2019 | WO | 2019096266 | A1 | 23 May 2019 |
| CN | 115603838 | A | 13 January 2023 | WO | 2023280212 | A1 | 12 January 2023 |
| CN | 109757127 | A | 14 May 2019 | KR | 20190028351 | A | 18 March 2019 |
| | | | | US | 2020403679 | A1 | 24 December 2020 |
| | | | | JP | 2020150558 | A | 17 September 2020 |
| | | | | KR | 20200049741 | A | 08 May 2020 |
| | | | | WO | 2019050159 | A1 | 14 March 2019 |
| | | | | US | 2019081678 | A1 | 14 March 2019 |
| | | | | JP | 2019532553 | A | 07 November 2019 |
| | | | | EP | 3480970 | A1 | 08 May 2019 |
| | | | | IN | 201927035644 | A | 28 February 2020 |
| US | 2022239356 | A1 | 28 July 2022 | WO | 2022158942 | A1 | 28 July 2022 |
| | | | | KR | 20230135079 | A | 22 September 2023 |
| | | | | EP | 4268384 | A1 | 01 November 2023 |

Form PCT/ISA/210 (patent family annex) (July 2022)